(19) Europäisches Patentamt / European Patent Office / Office européen des brevets

(11) **EP 4 394 656 A1**

(12) **EUROPEAN PATENT APPLICATION**
published in accordance with Art. 153(4) EPC

(43) Date of publication:
**03.07.2024 Bulletin 2024/27**

(21) Application number: **22869109.3**

(22) Date of filing: **08.09.2022**

(51) International Patent Classification (IPC):
**G06N 3/04** (2023.01)

(52) Cooperative Patent Classification (CPC):
**G06N 3/04; G06N 3/045; G06N 3/0464; G06N 3/082; G06N 3/084**

(86) International application number:
**PCT/CN2022/117792**

(87) International publication number:
**WO 2023/040740 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2021 CN 202111100770**

(71) Applicant: **Huawei Technologies Co., Ltd.
Shenzhen, Guangdong 518129 (CN)**

(72) Inventors:
- **SUN, Yunxiao**
  **Shenzhen, Guangdong 518129 (CN)**
- **ZHOU, Yucong**
  **Shenzhen, Guangdong 518129 (CN)**
- **ZHONG, Zhao**
  **Shenzhen, Guangdong 518129 (CN)**

(74) Representative: **Maiwald GmbH
Engineering
Elisenhof
Elisenstrasse 3
80335 München (DE)**

(54) **METHOD FOR OPTIMIZING NEURAL NETWORK MODEL, AND RELATED DEVICE**

(57) In this method, a second neural network model is obtained by processing a first neural network model, and the second neural network model includes an optimized attention layer and at least two previous network layers. An input of an optimized query Query feature transformation module is obtained based on an output feature of at least one previous network layer of the optimized attention layer. An input of an optimized key Key feature transformation module is obtained based on an output feature of at least one previous network layer of the optimized attention layer. An input of an optimized value Value feature transformation module is obtained based on an output feature of at least one previous network layer of the optimized attention layer. An input of at least one feature transformation module in the optimized query Query feature transformation module, the optimized key Key feature transformation module, and the optimized value Value feature transformation module is obtained based on an output feature of at least one non-adjacent previous network layer of the optimized attention layer. This method enhances an expression capability of the second neural network model.

FIG. 7

## Description

This application claims priority to Chinese Patent Application No. 202111100770.X, filed with the China National Intellectual Property Administration on September 18, 2021 and entitled "NEURAL NETWORK MODEL OPTIMIZATION METHOD AND RELATED DEVICE", which is incorporated herein by reference in its entirety.

## TECHNICAL FIELD

This application relates to the field of artificial intelligence, and in particular, to a neural network model optimization method and a related device.

## BACKGROUND

A neural network model can complete tasks such as target detection, target classification, machine translation, and speech recognition, and therefore is widely used in various fields such as security protection, transportation, and industrial production.

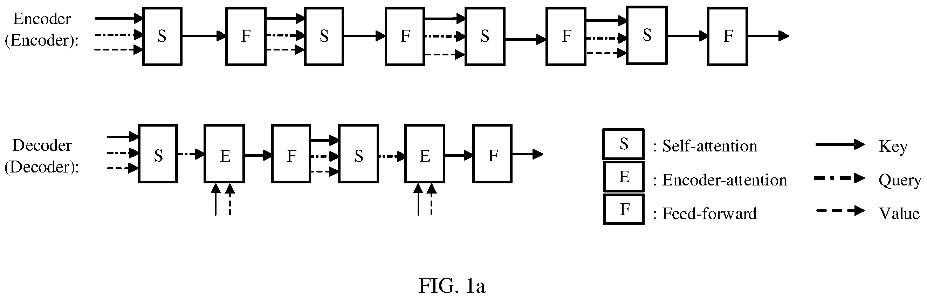

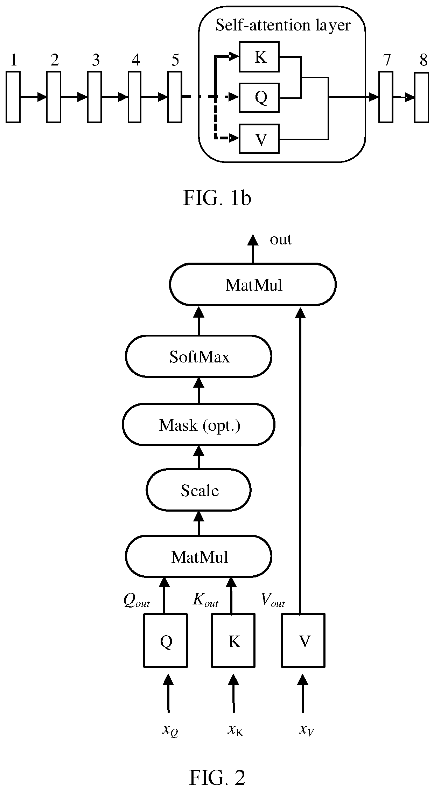

A transformer network model is a deep neural network model that does not include a convolutional layer and that includes only a self-attention (Self-Attention) layer, an encoder-attention (Encoder-Attention) layer, and a feed-forward (Feed-Forward) layer. Thanks to an ability of a self-attention operation to extract features from a global receptive field, the transformer network model is widely used in computer vision, natural language processing, and the like. A network structure of a standard transformer is shown in FIG. 1a. FIG. 1a and FIG. 1b are schematic diagrams of a structure of a standard transformer network model. The standard transformer network model is formed by six encoders (Encoders) and six decoders (Decoders). The feed-forward layer (F in FIG. 1a) is formed by fully connected operations, and is responsible for extracting a correlation between data in a channel dimension. The self-attention layer (S in FIG. 1a) is mainly formed by self-attention operations, and extracts features of data in another dimension (patch or token). The encoder-attention layer performs an attention operation on an output feature of an encoder and an intermediate feature of a decoder.

Further, inputs of query (Query) feature transformation modules, key (Key) feature transformation modules, and value (Value) feature transformation modules at all self-attention layers in the transformer network model are completely the same, that is, the inputs of the query feature transformation modules, the key feature transformation modules, and the value feature transformation modules at all the self-attention layers are outputs of respective previous layers. Refer to FIG. 1b. For example, the self-attention layer is located at a sixth layer of the model. Inputs of a query feature transformation module (Q in FIG. 1b), a key feature transformation module (K in FIG. 1b), and a value feature transformation module (V in FIG. 1b) at the self-attention layer are all output features of a fifth layer of the model. Therefore, an entire transformer network is in a shape of a "straight cylinder". Such a network design causes an input connection manner of the transformer network to be fixed, and cannot ensure that the transformer network has good performance on all tasks.

## SUMMARY

This application provides a neural network model optimization method and a related device, to implement optimization processing on a neural network model, improve an expression capability of the model, and improve performance of the model.

According to a first aspect, a neural network model optimization method is provided, including the following step: performing optimization processing on a first neural network model to obtain a second neural network model. The second neural network model includes an optimized attention layer and at least two previous network layers of the optimized attention layer, and the at least two previous network layers are connected in series. The optimized attention layer includes an optimized query Query feature transformation module, an optimized key Key feature transformation module, and an optimized value Value feature transformation module. An input of the optimized query Query feature transformation module is obtained based on an output feature of at least one previous network layer of the optimized attention layer. An input of the optimized key Key feature transformation module is obtained based on an output feature of at least one previous network layer of the optimized attention layer. An input of the optimized value Value feature transformation module is obtained based on an output feature of at least one previous network layer of the optimized attention layer. An input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

According to the optimization method in this embodiment of this application, optimization processing is performed on the first neural network model, to obtain the second neural network model. The second neural network model includes the optimized attention layer and the at least two previous network layers of the optimized attention layer, and each previous network layer may be a single network layer or include a plurality of parallel network layers. The optimized attention layer includes the optimized query Query feature transformation module, the optimized key Key feature transformation module, and the optimized value Value feature transformation module. The input of the optimized query Query feature transformation module is obtained based on the output feature of the at least one previous network layer of the optimized attention layer. The input of the optimized key Key feature transformation module is obtained based on the output feature of the at least one previous network layer of the optimized attention layer. The input of the optimized value Value feature transformation module is obtained based on the output feature of the at least one previous network layer of the optimized attention layer. The input of the at least one feature transformation module in the optimized query Query feature transformation module, the optimized key Key feature transformation module, and the optimized value Value feature transformation module is obtained based on the output feature of the at least one non-adjacent previous network layer of the optimized attention layer. In this way, the second neural network model obtained through optimization processing is supplemented with inter-layer feature information of a network, thereby enhancing an expression capability of the model, and improving task processing performance of the model.

Optionally, an input of a target feature transformation module is the output feature of the at least one previous network layer of the optimized attention layer, and the target feature transformation module is any one of the optimized query Query feature transformation module, the optimized key Key feature transformation module, and the optimized value Value feature transformation module.

Optionally, the first neural network model includes an attention layer and at least two previous network layers of the attention layer that are connected in series, and the at least two previous network layers are connected in series. The performing optimization processing on a first neural network model to obtain a second neural network model specifically includes the following steps: determining a search space of the first neural network model, where elements in the search space include previous network layers that can be connected to the first query Query feature transformation module, the first key Key feature transformation module, and the first value Value feature transformation module at the attention layer; and determining the optimized attention layer according to a search space-based search algorithm, where the search algorithm is used to determine, based on a search condition, a first previous network layer connected to the optimized query Query feature transformation module, a second previous network layer connected to the optimized key Key feature transformation module, and a third previous network layer connected to the optimized value Value feature transformation module; and at least one of the first previous network layer, the second previous network layer, and the third previous network layer is a non-adjacent previous network layer of the optimized attention layer.

In this embodiment of this application, after the search space corresponding to the first neural network model is determined, the search space-based search algorithm is used to perform search, and the optimized attention layer may be determined. To be specific, the first previous network layer connected to the optimized query Query feature transformation module, the second previous network layer connected to the optimized key Key feature transformation module, and the third previous network layer connected to the optimized value Value feature transformation module at the optimized attention layer are determined. The at least one of the first previous network layer, the second previous network layer, and the third previous network layer is the non-adjacent previous network layer of the optimized attention layer. It can be learned that a connection structure between the optimized attention layer and a previous network layer is different from a connection structure between the attention layer and a previous network layer in the first neural network model, and the optimized attention layer focuses on inter-layer feature fusion. Therefore, the optimized attention layer can enhance an expression capability of the second neural network model, and improve performance of the second neural network model.

Optionally, the search algorithm includes any one of an evolutionary algorithm, a reinforcement learning algorithm, and a network structure search algorithm.

A training convergence speed of the evolutionary algorithm is high, which improves a model optimization speed.

Optionally, the elements in the search space further include at least one of the following: an optional activation function of the first neural network model, an optional normalization operation of the first neural network model, an operation type of an optional feature map of the first neural network model, a quantity of optional parallel branches of the first neural network model, a quantity of modules in an optional search unit, and an optional connection manner between previous network layers other than the attention layer.

In this embodiment of this application, when the search space corresponding to the first neural network model is determined, in addition to using a possible connection relationship between the attention layer and the previous network layer as an element of the search space, the elements in the search space may be further extended, to improve model performance of the second neural network model determined after search.

Optionally, an input of a target feature transformation module is an input feature obtained by performing weighted summation on output features of the at least two previous network layers of the optimized attention layer and weights of the previous network layers. The target feature transformation module is any one of the optimized query Query feature transformation module, the optimized key Key feature transformation module, and the optimized value Value feature transformation module.

Optionally, the second neural network model further includes a first fusion module, a second fusion module, and a third fusion module. Output ends of all previous network layers of the optimized attention layer are connected to an input end of the first fusion module, and an output end of the first fusion module is connected to an input end of the optimized query Query feature transformation module. The first fusion module is configured to perform weighted summation processing based on a previous network layer connected to the first fusion module, to obtain a first input feature of the optimized query Query feature transformation module, and a parameter of the first fusion module includes a first weight corresponding to the previous network layer connected to the first fusion module. The output ends of all the previous network layers of the optimized attention layer are connected to an input end of the second fusion module, and an output end of the second fusion module is connected to an input end of the optimized key Key feature transformation module. The second fusion module is configured to perform weighted summation processing based on a previous network layer connected to the second fusion module, to obtain a second input feature of the optimized key Key feature transformation module, and a parameter of the second fusion module includes a second weight corresponding to the previous network layer connected to the second fusion module. The output ends of all the previous network layers of the optimized attention layer are connected to an input end of the third fusion module, and an output end of the third fusion module is connected to an input end of the optimized value Value feature transformation module. The third fusion module is configured to perform weighted summation processing based on a previous network layer connected to the third fusion module, to obtain a third input feature of the optimized value Value feature transformation module, and a parameter of the second fusion module includes a third weight corresponding to the previous network layer connected to the second fusion module.

In this embodiment of this application, the optimized query Query feature transformation module is used as an example. The first fusion module is added before the optimized query Query feature transformation module. The first fusion module is configured to perform weighted summation on all the previous network layers of the optimized attention layer to obtain the first input feature of the optimized query Query feature transformation module. The parameter of the first fusion module includes the first weight corresponding to the previous network layer connected to the first fusion module. In this way, the first fusion module may be used to fuse features of the previous network layers of the optimized attention layer, to enhance an expression capability of the optimized attention layer, and improve performance of the second neural network model.

Optionally, any one of the first fusion module, the second fusion module, and the third fusion module includes any one of the following structures: a static weighting module, a multilayer perceptron module, and an attention module.

According to a second aspect, this application further provides a neural network model. The neural network model includes an optimized attention layer and at least two previous network layers of the optimized attention layer, and the at least two previous network layers are connected in series. The optimized attention layer includes an optimized query Query feature transformation module, an optimized key Key feature transformation module, and an optimized value Value feature transformation module. An input of the optimized query Query feature transformation module is obtained based on an output feature of at least one previous network layer of the optimized attention layer. An input of the optimized key Key feature transformation module is obtained based on an output feature of at least one previous network layer of the optimized attention layer. An input of the optimized value Value feature transformation module is obtained based on an output feature of at least one previous network layer of the optimized attention layer. An input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

The neural network model provided in this embodiment of this application is supplemented with inter-layer feature information of a network, thereby enhancing an expression capability of the model, and improving task processing performance of the model.

Optionally, an input of a target feature transformation module is the output feature of the at least one previous network layer of the optimized attention layer, and the target feature transformation module is any one of the optimized query Query feature transformation module, the optimized key Key feature transformation module, and the optimized value Value feature transformation module.

Optionally, an input of a target feature transformation module is an input feature obtained by performing weighted summation on output features of the at least two previous network layers of the optimized attention layer and weights of the previous network layers. The target feature transformation module is any one of the optimized query Query feature transformation module, the optimized key Key feature transformation module, and the optimized value Value feature transformation module.

Optionally, the neural network model further includes a first fusion module, a second fusion module, and a third fusion module. Output ends of all previous network layers of the optimized attention layer are connected to an input end of the first fusion module, and an output end of the first fusion module is connected to an input end of the optimized query Query feature transformation module. The first fusion module is configured to perform weighted summation processing based on a previous network layer connected to the first fusion module, to obtain a first input feature of the optimized query Query feature transformation module, and a parameter of the first fusion module includes a first weight corresponding to the previous network layer connected to the first fusion module. The output ends of all the previous network layers of the optimized attention layer are connected to an input end of the second fusion module, and an output end of the second fusion module is connected to an input end of the optimized key Key feature transformation module. The second fusion module is configured to perform weighted summation processing based on a previous network layer connected to the second fusion module, to obtain a second input feature of the optimized key Key feature transformation module, and a parameter of the second fusion module includes a second weight corresponding to the previous network layer connected to the second fusion module. The output ends of all the previous network layers of the optimized attention layer are connected to an input end of the third fusion module, and an output end of the third fusion module is connected to an input end of the optimized value Value feature transformation module. The third fusion module is configured to perform weighted summation processing based on a previous network layer connected to the third fusion module, to obtain a third input feature of the optimized value Value feature transformation module, and a parameter of the second fusion module includes a third weight corresponding to the previous network layer connected to the second fusion module.

Optionally, any one of the first fusion module, the second fusion module, and the third fusion module includes any one of the following structures: a static weighting module, a multilayer perceptron module, and an attention module.

According to a third aspect, this application further provides a model optimization apparatus, including: a processing module, configured to perform optimization processing on a first neural network model to obtain a second neural network model. The second neural network model includes an optimized attention layer and at least two previous network layers of the optimized attention layer, and the at least two previous network layers are connected in series. The optimized attention layer includes an optimized query Query feature transformation module, an optimized key Key feature transformation module, and an optimized value Value feature transformation module. An input of the optimized query Query feature transformation module is obtained based on an output feature of at least one previous network layer of the optimized attention layer. An input of the optimized key Key feature transformation module is obtained based on an output feature of at least one previous network layer of the optimized attention layer. An input of the optimized value Value feature transformation module is obtained based on an output feature of at least one previous network layer of the optimized attention layer. An input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

According to a fourth aspect, this application further provides a model optimization device, including a processor and a memory. The processor is connected to the memory, the memory is configured to store program code, and the processor is configured to invoke the program code, to perform the neural network model optimization method according to the first aspect.

According to a fifth aspect, this application further provides a computer-readable storage medium. The computer-readable storage medium stores a computer program, and the computer program is executed by a processor to implement the neural network model optimization method according to the first aspect.

According to a sixth aspect, this application further provides a computer program product including instructions. When the computer program product runs on a computer, the computer is enabled to perform the neural network model optimization method according to the first aspect.

According to a seventh aspect, a chip is provided. The chip includes a processor and a data interface, and the processor reads, through the data interface, instructions stored in a memory, to perform the neural network model optimization method according to the first aspect.

Optionally, in an implementation, the chip may further include a memory. The memory stores instructions. The processor is configured to execute the instructions stored in the memory. When the instructions are executed, the processor is configured to perform the neural network model optimization method according to the first aspect.

According to an eighth aspect, this application further provides a terminal device, where the neural network model according to the second aspect is run on the terminal device.

## BRIEF DESCRIPTION OF DRAWINGS

The following describes accompanying drawings used in embodiments of this application.

FIG. 1a and FIG. 1b are schematic diagrams of a structure of a standard transformer network model;
FIG. 2 is a schematic diagram of an attention layer;
FIG. 3 is a schematic diagram of a system architecture according to an embodiment of this application;
FIG. 4 is a schematic diagram of a convolutional neural network according to an embodiment of this application;

FIG. 5 is a schematic diagram of a hardware structure of a chip according to an embodiment of this application;

FIG. 6 is a schematic flowchart of a neural network model optimization method according to an embodiment of this application;

FIG. 7 is a schematic diagram of an optimized attention layer according to an embodiment of this application;

FIG. 8 is a schematic diagram of a framework of an evolutionary algorithm according to an embodiment of this application;

FIG. 9a, FIG. 9b, and FIG. 9c are schematic diagrams of a network structure search process according to an embodiment of this application;

FIG. 10 is a schematic diagram of a structure of a transformer network model after optimization processing according to an embodiment of this application;

FIG. 11 is a schematic diagram of a framework of another evolutionary algorithm according to an embodiment of this application;

FIG. 12 is a schematic diagram of a structure of another optimized attention layer according to an embodiment of this application;

FIG. 13a, FIG. 13b, and FIG. 13c are schematic diagrams of a structure of a first fusion module according to an embodiment of this application;

FIG. 14 is a schematic diagram of a structure of a model optimization apparatus according to an embodiment of this application;

FIG. 15 is a schematic diagram of a structure of a model optimization device according to an embodiment of this application; and

FIG. 16 is a schematic diagram of a structure of a terminal device according to an embodiment of this application.

## DESCRIPTION OF EMBODIMENTS

The following describes technical solutions of this application with reference to accompanying drawings.

Embodiments of this application relate to a large quantity of neural network applications. Therefore, for ease of understanding, the following first describes terms and concepts related to the neural network in embodiments of this application.

(1) Neural network

The neural network may include a neuron. The neuron may be an operation unit for which $x_s$ and an intercept of 1 are used as an input. An output of the operation unit may be as follows:

$$h_{W,b}\left(x\right) = f\left(W^T x\right) = f\left(\sum\nolimits_{s=1}^{n} W_s x_s + b\right)$$

Herein, s=1, 2, ..., or n, n is a natural number greater than 1, $W_s$ is a weight of $x_s$ and $b$ is a bias of the neuron. $f$ is an activation function (activation function) of the neuron, which is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting many single neurons together. That is, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multilayer neural network, and may be understood as a neural network having a plurality of hidden layers. There is no special metric for "a plurality of" herein. The DNN is divided based on locations of different layers, and a neural network in the DNN may fall into three types: an input layer, a hidden layer, and an output layer. Generally, a first layer is the input layer, a last layer is the output layer, and a middle layer is the hidden layer. Layers are fully connected. In other words, any neuron at an $i^{th}$ layer is definitely connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, $W$ is a weight matrix (also referred to as a coefficient), and $\alpha()$ is an activation function. At each layer, such a simple operation is performed on the input vector $\vec{x}$, to obtain the output vector $\vec{y}$. Because a quantity of DNN layers is large, a quantity of coefficients $W$ and a quantity

of offset vectors $\vec{b}$ are also large. These parameters are defined in the DNN as follows: The coefficient $W$ is used as an example. It is assumed that in a three-layer DNN, a linear coefficient from a fourth neuron at the second layer to a second neuron at the third layer is defined as $W_{24}^{3}$. A superscript 3 represents a layer number of a layer corresponding to the coefficient $W$, and a subscript corresponds to an index 2 of the output third layer and an index 4 of the input second layer. In summary, a coefficient from a $k^{th}$ neuron at an (L-1)$^{th}$ layer to a $j^{th}$ neuron at an L$^{th}$ layer is defined as $W_{jk}^{L}$. It should be noted that the input layer does not have the parameter $W$. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Convolutional neural network

The convolutional neural network (CNN, Convolutional Neural Network) is a deep neural network with a convolutional structure. The convolutional neural network includes a feature extractor including a convolutional layer and a subsampling layer. The feature extractor may be considered as a filter. A convolution process may be considered as performing convolution on an input image or a convolution feature plane (feature map) by using a trainable filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neural units that are in a rectangular arrangement. Neural units of a same feature map share a weight, and the shared weight herein is a convolution kernel. Weight sharing may be understood as that an image information extraction manner is irrelevant to a location. A principle implied herein is that statistics of a part of an image are the same as those of another part. This means that image information learned from a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected by performing a convolution operation.
The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(4) Recurrent neural network

The recurrent neural network (RNN, Recurrent Neural Network) is used to process sequence data. A conventional neural network model starts from an input layer to a hidden layer and then to an output layer, and the layers are fully connected, while nodes in each layer are unconnected. Although this ordinary neural network resolves many problems, many problems still cannot be resolved. For example, if a word in a sentence is to be predicted, a previous word usually needs to be used, because adjacent words in the sentence are related. A reason why the RNN is referred to as the recurrent neural network is that a current output of a sequence is also related to a previous output of the sequence. A specific representation form is that the network memorizes previous information and applies the previous information to computation of the current output. That is, nodes at the hidden layer are no longer connectionless but connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on a network status in several previous steps. The learning algorithm is referred to as a back propagation through time Back propagation Through Time (BPTT) algorithm.
Why is the recurrent neural network still required when the convolutional neural network is available? A reason is simple. In the convolutional neural network, there is a premise that elements are independent of each other, and input and output are also independent, such as a cat and a dog. However, in the real world, a plurality of elements are interconnected. For example, the stock changes with time. For another example, a person says "I like traveling, and the most favorite place is Yunnan. In the future, when there is a chance, I will go to (__)." Herein, people should know that the person will go to "Yunnan". Because people perform inference from the context. However, how does a machine do that? Then, the RNN emerges. The RNN is intended to make the machine capable of memorizing like a human. Therefore, an output of the RNN needs to depend on current input information and historical memorized information.

(5) Loss function

In a process of training the deep neural network, because it is expected that output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, that is, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(7) Attention

The attention (Attention) operation extracts the weight used to describe the feature importance from a large amount of information included in the data, and combines the weight with the feature, so that the network focuses on the information with a larger weight. A network layer that performs an attention operation is an attention layer. Specifically, refer to FIG. 2. FIG. 2 is a schematic diagram of the attention layer. The attention layer includes a first query Query feature transformation module (that is, a Q module in FIG. 2), a first key Key feature transformation module (that is, a K module in FIG. 2), and a first value Value feature transformation module (that is, a V module in FIG. 2). The inputs $x_Q$, $x_K$, and $x_V$ of the attention layer are respectively transformed into $K_{out}$, $Q_{out}$, and $V_{out}$ the Q module, the K module, and the V module respectively through feature transformation. Related weights are generated based on $K_{out}$ and $Q_{out}$, weighted summation is performed on $V_{out}$ based on weight coefficients, and finally a weighted feature out is output. The self-attention (Self-Attention) operation is a special attention operation. That is, when $x_Q=x_K=x_V=x$ in the attention layer, the attention layer is the self-attention layer.

Refer to FIG. 2. The following describes a basic process of the self-attention operation. The input of the self-attention layer is $x$. First, three feature transformations are separately performed on $x$ to obtain $Q_{out}$, $K_{out}$, and $V_{out}$:

$$Q_{out} = xW_Q \quad K_{out} = xW_K \quad V_{out} = xW_V \qquad (1)$$

In formula (1), $x$ is the input of the self-attention layer, $W_Q$, $W_K$, and $W_v$ are feature transformation matrices, and $W_Q$, $W_K$, and $W_v$ are fully connected layers in the convolutional neural network, and their weights are learnable parameters. A purpose of multiplying $x$ by $W_Q$, $W_K$, and $W_v$ to obtain $Q_{out}$, $K_{out}$, and $V_{out}$ is to map the $x$ feature to another dimension, so that the mapped features can meet the requirements for $Q_{out}$, $K_{out}$, and $V_{out}$ in the attention operation, and functions of $W_Q$, $W_K$, and $W_v$ are gradually reflected as a deep neural network training process is performed. Generally, a content feature of an input can be described by using Kout obtained after the $W_K$ transformation, and represents what the input feature is. $Q_{out}$ obtained after the feature transformation is performed by using $W_Q$ can include a guided feature of the input, and represents what information is required for model processing. $V_{out}$ obtained after the $W_v$ feature transformation is a vector that represents the input feature.

Then matrix multiplication (MatMul) is performed on $Q_{out}$ and $K_{out}$, and then numerical scaling processing is performed by using a numerical scaling (Scale) layer. Optionally, in the text processing field, in the attention operation, a mask (Mask) layer is further used to process data after numerical scaling. Finally, after a Softmax normalization operation is performed, an attention map describing an autocorrelation between dimensions of $x$ is obtained, that is, the attention map is:

$$A = \mathrm{softmax}(\frac{Q_{out}K_{out}{}^T}{\sqrt{d}}) \qquad\qquad (2)$$

In formula (2), $d$ is a constant, which is a user-defined value, and is specifically set according to different requirements of the model. The $Q_{out}K_{out}^T$ matrix multiplication operation is equivalent to searching for the guided feature in the content feature.

Finally, an attention map is used to weight $V_{out}$, that is, matrix multiplication is performed on $V_{out}$, and the attention map, and then the matrix multiplication result is used as the output of the attention layer after feature transformation. $W_{out}$ in formula (3) is a feature transformation matrix.

$$out = AV_{out}W_{out} \qquad\qquad (3)$$

Based on the foregoing description of the attention operation, the attention operation is denoted as: $\mathrm{Attention}(x_Q, x_K, x_V)$

The self-attention (SA) operation is based on the attention operation. The inputs of the Q module, the K module, and the V module are set to the same input $x$. The self-attention operation is denoted as:

$$\mathrm{SA}(x) = \mathrm{Attention}(x, x, x)$$

In the conventional technology, for a network model to which an attention mechanism is applied, for example, a transformer network model, refer to FIG. 1a and FIG. 1b. Inputs of all query feature transformation modules, key feature transformation modules, and value feature transformation modules at the self-attention layer in the network are outputs of respective previous layers. Therefore, the entire transformer network is a "straight cylinder". Such a network design causes an input connection manner of the transformer network to be fixed, and cannot ensure that the transformer network has good performance on all tasks.

For the foregoing technical problem, an embodiment of this application provides a neural network model optimization method, to optimize a first neural network model, to obtain a second neural network model. The second neural network model is different from a "straight cylinder" in the conventional technology, and considers inter-layer feature information of a network, so that an expression capability of the model can be effectively enhanced, and task processing performance of the model can be improved.

Particularly, the neural network model optimization method in this embodiment of this application may be applied to all neural network models having an attention mechanism, for example, a neural network model corresponding to a task scenario such as target detection, target classification, image classification, machine translation, speech recognition, or text recognition. An original neural network model is optimized by using the neural network model optimization method in this embodiment of this application, to obtain an optimized neural network model, and improve performance of the model.

**Embodiment 1**

The following describes a system architecture according to an embodiment of this application.

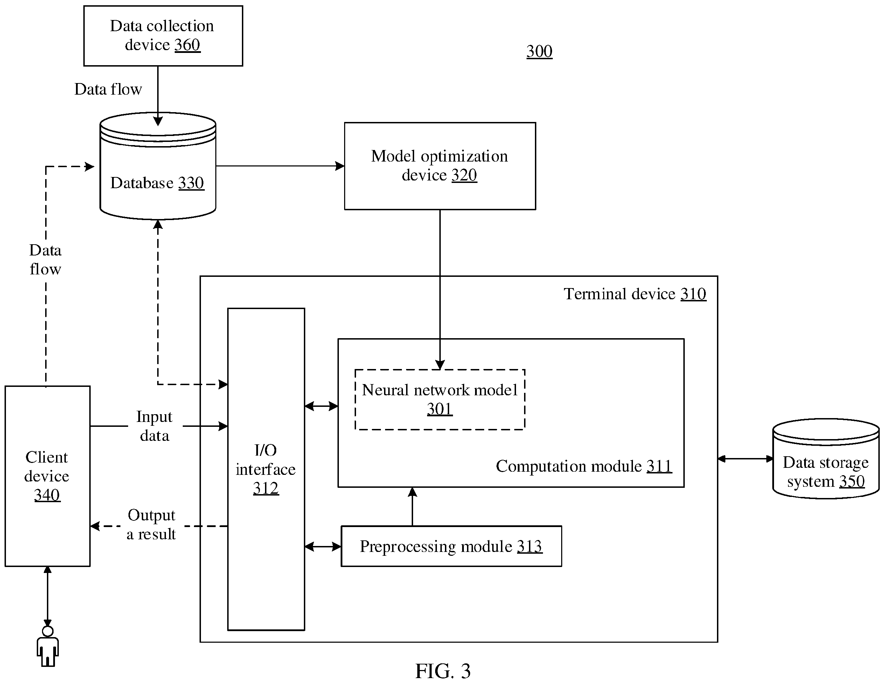

Refer to FIG. 3. This embodiment of this application provides a system architecture 300. As shown in the system architecture 300, a data collection device 360 is configured to collect training data. In this embodiment of this application, the training data varies based on different model tasks. For example, when the model task is speech recognition, the training data is speech data. When the model task is text recognition, the training data is text data. For another example, when the model task is image classification, and animal image classification is used as an example, the training data is an animal image, for example, an image including an animal such as a cat, a dog, or a rabbit. The training data is stored in a database 330. A model optimization device 320 may perform optimization processing on a to-be-optimized neural network model (that is, a first neural network model), to obtain an optimized neural network model 301 (301 herein is the second neural network model obtained after optimization processing described above). For example, the model optimization device 320 performs, based on training data maintained in the database 330, optimization processing on the to-be-optimized neural network model (that is, the first neural network model), to obtain the optimized neural network model 301 (301 herein is the second neural network model obtained after optimization processing described above). The model optimization device 320 may be a terminal, for example, a mobile phone terminal, a tablet computer, a notebook computer, an AR/VR device, an in-vehicle terminal, a monitoring device, an in-vehicle self-driving system, unmanned vending machine, or the like, or may be a server, a cloud, or the like. The following Embodiment 2 describes in more detail how the model optimization device 320 performs optimization processing on the to-be-optimized neural network model to obtain the neural network model 301. The neural network model 301 can be used to implement various model tasks. It should be noted that, during actual application, the training data maintained in the database 330 is not necessarily all collected by the data collection device 360, and may be received from another device, for example, a camera. In addition, it should be noted that, during actual application, the training data maintained in the database 330 is not necessarily all collected by the data collection device 360, and may be received from another device. In addition, it should be noted that the model optimization device 320 does not necessarily perform model optimization processing completely based on the training data maintained in the database 330, or may obtain the training data from a cloud or another place to perform model optimization processing. The foregoing description should not be construed as a limitation on embodiments of this application.

A neural network model 301 obtained after optimization processing by the model optimization device 320 may be used in different systems or devices, for example, used in a terminal device 310 shown in FIG. 3. The terminal device 310 may be a terminal, for example, a mobile phone terminal, a tablet computer, a notebook computer, an AR/VR device, an in-vehicle terminal, a monitoring device, an in-vehicle self-driving system, an unmanned vending machine, or the like, or may be a server, a cloud, or the like. In FIG. 3, the terminal device 310 is provided with an I/O interface 312, configured to exchange data with an external device. A user may input data to the I/O interface 312 by using a client device 340. The input data varies based on different model tasks in this embodiment of this application. For example, for a neural network model whose model task is image classification, the input data is a to-be-processed picture including a target object, and the input data may be input by the user, or may be obtained from a database. The client device 340 may be a picture obtaining device, for example, a camera. For a neural network model whose model task is speech recognition, the input data is to-be-recognized speech data. For a neural network model whose model task is text recognition, the input data is to-be-recognized text data.

A preprocessing module 313 is configured to perform preprocessing based on input data (for example, a to-be-processed picture) received by the I/O interface 312. In this embodiment of this application, the preprocessing module 313 is configured to perform preprocessing based on the input data (for example, the to-be-processed picture) received by the I/O interface 312, and preprocessed data is input to a computation module 311. In this embodiment of this application, for the neural network model whose model task is image classification, the preprocessing module 313 may be configured to perform at least one of processing operations such as filtering, enhancement, and denoising on the to-be-processed picture, to obtain a to-be-processed picture that meets a requirement.

In a process in which the terminal device 310 preprocesses the input data, or in a process in which the computation module 311 of the terminal device 310 performs computation, the terminal device 310 may invoke data, code, and the like in a data storage system 350 for corresponding processing, and may further store, in the data storage system 350, data, an instruction, and the like that are obtained through the corresponding processing.

Finally, the I/O interface 312 returns a model processing result of the input data to the client device 340, to provide the model processing result for the user. In this case, the client device 340 may be a display.

It should be noted that the model optimization device 320 may be used for different tasks, and the corresponding neural network model 301 may be used to complete the foregoing tasks, to provide a required result for the user.

In a case shown in FIG. 3, the user may manually provide input data. The input data may be manually provided on a screen that is provided through the I/O interface 312. In another case, the client device 340 may automatically send input data to the I/O interface 312. If it is required that the client device 340 needs to be permitted by the user to automatically send the input data, the user may set corresponding permission on the client device 340. The user can view, on the client device 340, a result output by the terminal device 310. The result may be specifically presented in a specific manner, for example, display, sound, or an action. The client device 340 may also serve as a data collector to collect, as new sample data, the input data that is input to the I/O interface 312 and the output result that is output from the I/O interface 312 that are shown in FIG. 3, and store the new sample data into the database 330. Certainly, the client device 340 may alternatively not perform collection, but the I/O interface 312 directly stores, as new sample data into the database 330, the input data that is input to the I/O interface 312 and the output result that is output from the I/O interface 312 that are shown in FIG. 3.

It should be noted that FIG. 3 is merely a schematic diagram of a system architecture according to an embodiment of this application. Location relationships between a device, a component, a module, and the like shown in the figure do not constitute any limitation. For example, in FIG. 3, the data storage system 350 is an external memory relative to the terminal device 310, but in another case, the data storage system 350 may be disposed in the terminal device 310. In addition, the model optimization device 320 and the terminal device 310 may be a same device.

As shown in FIG. 3, the neural network model 301 is obtained through optimization processing by the model optimization device 320. For example, a model task is image classification. The neural network model 301 in this embodiment of this application may include a feature extractor and a predictor. The feature extractor is configured to extract a feature vector of a to-be-processed picture, and the predictor is configured to process the feature vector of the to-be-processed picture to obtain a corresponding processing result. In this embodiment of this application, both the feature extractor and the predictor may be a convolutional neural network. Particularly, an attention mechanism may be applied in the feature extractor, to extract features that the model task is more concerned about.

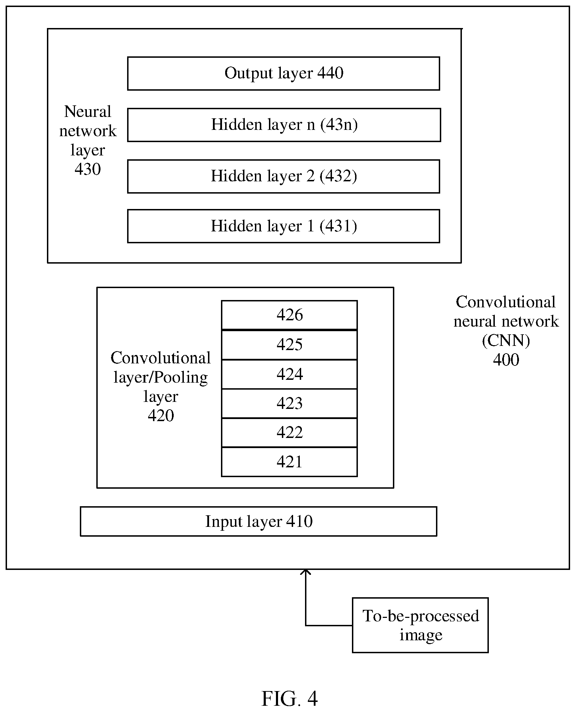

As described in the foregoing basic concepts, the convolutional neural network is a deep neural network having a convolutional structure, and is a deep learning (deep learning) architecture. In the deep learning architecture, multi-layer learning is performed at different abstract levels according to a machine learning algorithm. As a deep learning architecture, the CNN is a feed-forward (feed-forward) artificial neural network. Neurons in the feed-forward artificial neural network may respond to an input image. In FIG. 4, a convolutional neural network (CNN) 400 may include an input layer 410, a convolutional layer/pooling layer 420 (the pooling layer is optional), and a neural network layer 430.

Convolutional layer/Pooling layer 420:

Convolutional layer:

As shown in FIG. 4, the convolutional layer/pooling layer 420 may include, for example, layers 421 to 426. For example, in an implementation, the layer 421 is a convolutional layer, the layer 422 is a pooling layer, the layer 423 is a convolutional layer, the layer 424 is a pooling layer, the layer 425 is a convolutional layer, and the layer 426 is a pooling layer. In another implementation, 421 and 422 are convolutional layers, 423 is a pooling layer, 424 and 425 are convolutional layers, and 426 is a pooling layer. That is, an output of a convolutional layer may be used as an input of a subsequent pooling layer, or may be used as an input of another convolutional layer to continue a convolution operation.

The following uses the convolutional layer 421 as an example to describe an internal operating principle of one convolutional layer.

The convolutional layer 421 may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels or the like, depending on a value of a stride stride) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows × columns), namely, a plurality of same-type matrices, are used. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows × columns), and feature maps extracted from the plurality of weight matrices with the same size have a same size. Then, the plurality of extracted feature maps with the same size are combined to form an output of the convolution operation.

Weight values in these weight matrices need to be obtained through a lot of training during actual application. Each weight matrix formed by using the weights obtained through training may be used to extract information from an input image, to enable a convolutional neural network 400 to perform correct prediction.

When the convolutional neural network 400 includes a plurality of convolutional layers, a larger quantity of general features are usually extracted at an initial convolutional layer (for example, 421). The general features may be also referred to as low-level features. As a depth of the convolutional neural network 400 increases, a feature extracted at a more subsequent convolutional layer (for example, 426) is more complex, for example, a high-level semantic feature or the like. A feature with a higher-level semantics is more applicable to a to-be-resolved problem.

Pooling layer:

Because a quantity of training parameters usually needs to be reduced, a pooling layer usually needs to be periodically introduced behind a convolutional layer. For the layers 421 to 426 shown in 420 in FIG. 4, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on the input image to obtain an image with a small size. The average pooling operator may be used to compute pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to a size of an image. A size of an image output after processing at the pooling layer may be less than a size of an image input to the pooling layer. Each pixel in the image output from the pooling layer represents an average value or a maximum value of a corresponding sub-area of the image input to the pooling layer.

Neural network layer 430:

After processing is performed at the convolutional layer/pooling layer 420, the convolutional neural network 400 still cannot output required output information. As described above, at the convolutional layer/pooling layer 420, only a feature is extracted, and parameters resulting from the input image are reduced. However, to generate final output information (required class information or other related information), the convolutional neural network 400 needs to use the neural network layer 430 to generate an output of one required class or outputs of a group of required classes. Therefore, the neural network layer 430 may include a plurality of hidden layers (431, 432, ..., and 43n shown in FIG. 4) and an output layer 440. Parameters included in the plurality of hidden layers may be obtained through pre-training based on related training data of a specific task type. For example, the task type may include posture recognition, image classification, super-resolution image reconstruction, or the like.

The plurality of hidden layers included in the neural network layer 430 are followed by the output layer 440, namely, a last layer of the entire convolutional neural network 400. The output layer 440 has a loss function similar to a categorical cross entropy, and the loss function is specifically used to compute a prediction error. Once forward propagation (for example, propagation from a direction from 410 to 440 in FIG. 4 is forward propagation) of the entire convolutional neural network 400 is completed, back propagation (for example, propagation from a direction from 440 to 410 in FIG. 4 is back propagation) is started to update weights and deviations of the layers mentioned above, to reduce a loss of the convolutional neural network 400 and an error between a result output by the output layer in the convolutional neural network 400 and an ideal result.

It should be noted that the convolutional neural network 400 shown in FIG. 4 is merely used as an example of a convolutional neural network. In specific application, the convolutional neural network may alternatively exist in a form of another network model. In addition, the convolutional neural network shown in FIG. 4 is merely used as an example of a neural network model. The neural network model 301 may alternatively be a network model of another structure provided that an attention mechanism is applied to the model. That is, the model includes network layers in the attention mechanism, such as the attention layer and the self-attention layer.

The following describes a hardware structure of a chip according to an embodiment of this application.

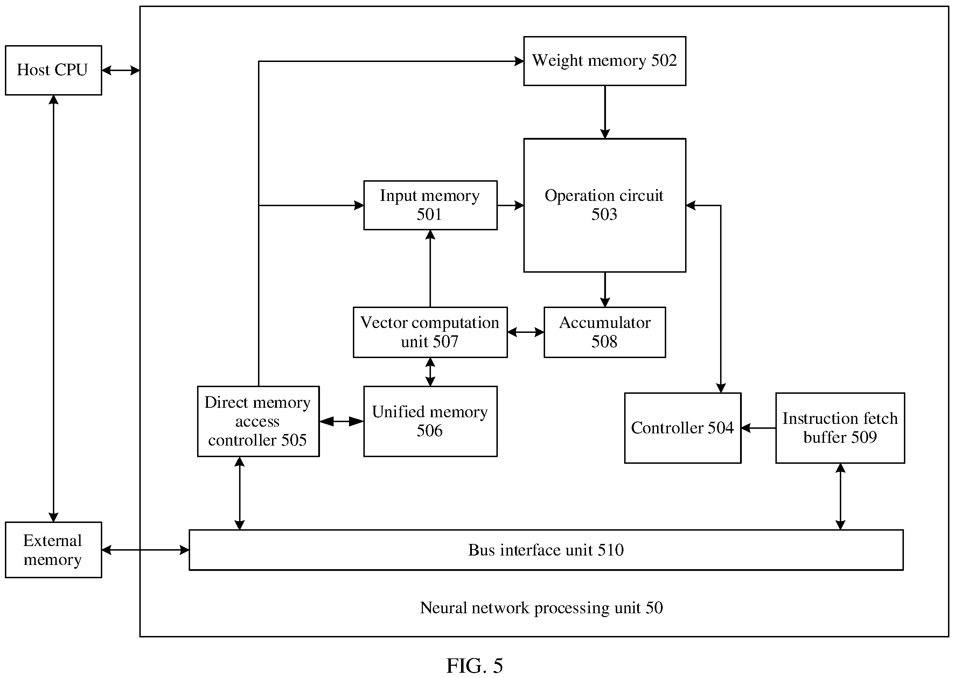

FIG. 5 shows a hardware structure of a chip according to an embodiment of this application. The chip includes a neural network processing unit 50. The chip may be disposed in the terminal device 310 shown in FIG. 3, to complete computation work of the computation module 311. The chip may alternatively be disposed in the model optimization device 320 shown in FIG. 3, to complete model optimization processing of the model optimization device 320 and output the neural network model 301. Algorithms of all the layers in the convolutional neural network shown in FIG. 4 may be implemented in the chip shown in FIG. 5.

The neural network processing unit NPU 50, as a coprocessor, is mounted to a host CPU (Host CPU), and the host CPU assigns a task. A core part of the NPU is an operation circuit 503, and a controller 504 controls the operation circuit 503 to extract matrix data in a memory (a weight memory 502 or an input memory 501) and perform a multiplication operation.

In some implementations, the operation circuit 503 includes a plurality of processing units (Process Engine, PE). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there are an input matrix A, a weight matrix B, and an output matrix C. The operation circuit fetches, from the weight memory 502, data corresponding to the matrix B, and caches the data on each PE in the operation circuit 503. The operation circuit 503 extracts data of the matrix A from the input memory 501, to perform a matrix operation on the matrix B, and a partial result or a final result of an obtained matrix is stored in an accumulator (accumulator) 508.

A vector computation unit 507 may perform further processing on an output of the operation circuit, for example, vector multiplication, vector addition, exponential operation, logarithmic operation, size comparison, and the like. For example, the vector computation unit 507 may be configured to perform network computation, such as pooling (Pooling), batch normalization (Batch Normalization), or local response normalization (Local Response Normalization), at a non-convolutional/non-FC layer in a neural network.

In some implementations, the vector computation unit 507 stores a processed output vector into a unified memory 506. For example, the vector computation unit 507 may apply a nonlinear function to the output, for example, a vector of an accumulated value, of the operation circuit 503, to generate an activation value. In some implementations, the vector computation unit 507 generates a normalized value, a combined value, or both a normalized value and a combined value. In some implementations, the processed output vector can be used as an activation input to the operation circuit 503, for example, to be used at a subsequent layer in the neural network.

The unified memory 506 is configured to store input data and output data.

For weight data, a direct memory access controller (direct memory access controller, DMAC) 505 directly transfers input data in an external memory to the input memory 501 and/or the unified memory 506, transfers weight data in the external memory to the weight memory 502, and stores data in the unified memory 506 into the external memory. The input data is also transferred to the unified memory 506 by using the DMAC.

A bus interface unit (bus interface unit, BIU) 510 is configured to implement interaction between the host CPU, the DMAC, and an instruction fetch buffer 509 by using a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control an operating process of an operation accelerator.

Usually, the unified memory 506, the input memory 501, the weight memory 502, and the instruction fetch buffer 509 may all be on-chip (On-Chip) memories. The external memory is a private memory hardware architecture outside the NPU, and the external memory may be a double data rate synchronous dynamic random access memory (Double Data Rate Synchronous Dynamic Random Access Memory, DDR SDRAM for short), a high-bandwidth memory (High Bandwidth Memory, HBM), or another readable and writable memory.

The program algorithms in FIG. 3 and FIG. 4 are jointly completed by the host CPU and the NPU. An operation of each layer in the convolutional neural network shown in FIG. 4 may be performed by the operation circuit 503 or the vector computation unit 507.


**Embodiment 2**

The following describes a neural network model optimization method according to an embodiment of this application.

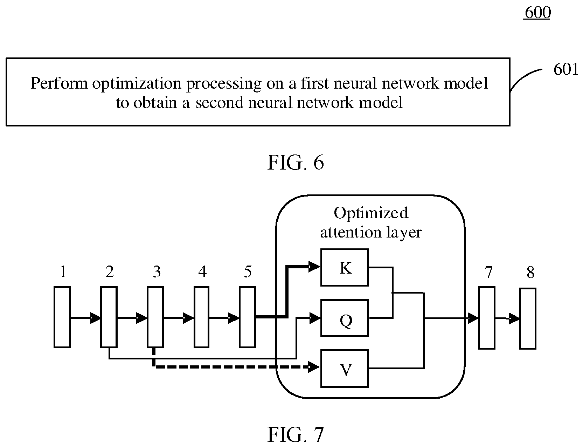

FIG. 6 is a schematic flowchart of a neural network model optimization method according to an embodiment of this application. The neural network model optimization method 600 includes the following step:

601: Perform optimization processing on a first neural network model to obtain a second neural network model.

The second neural network model includes an optimized attention layer and at least two previous network layers of the optimized attention layer, and the at least two previous network layers are connected in series. The previous network layer herein is a network layer between an input of the second neural network model and an input of the optimized attention layer. FIG. 7 is a schematic diagram of an optimized attention layer according to an embodiment of this application. In the model, the first layer and the fifth layer that are connected in series are previous network layers of the optimized attention layer. Particularly, a specific structure of the previous network layer may be formed by a single network layer or by a plurality of parallel network layers. For example, the fifth layer in FIG. 7 may be formed by a plurality of parallel network layers.

The optimized attention layer includes an optimized query Query feature transformation module, an optimized key Key feature transformation module, and an optimized value Value feature transformation module. The optimized query Query feature transformation module is a module that performs feature transformation by using a $W_Q$ feature transformation matrix at the optimized attention layer. Similarly, the optimized key Key feature transformation module is a module that performs feature transformation by using a $W_K$ feature transformation matrix at the optimized attention layer; and the optimized value Value feature transformation module is a module that performs feature transformation by using a $W_V$ feature transformation matrix at the optimized attention layer. For detailed descriptions of the $W_Q$ feature transformation matrix, the $W_K$ feature transformation matrix, and the $W_V$ feature transformation matrix, refer to related descriptions in "(7) Attention". Details are not described herein again.

An input of the optimized query Query feature transformation module is obtained according to an output feature of at least one previous network layer of the optimized attention layer;

an input of the optimized key Key feature transformation module is obtained based on an output feature of at least one previous network layer of the optimized attention layer; and

an input of the optimized value Value feature transformation module is obtained based on an output feature of at least one of the previous network layers of the optimized attention layer.

An input of at least one feature transformation module in the optimized query Query feature transformation module, the optimized key Key feature transformation module, and the optimized value Value feature transformation module is obtained based on an output feature of at least one previous network layer of the optimized attention layer. A specific form of the input of the feature transformation module may be a feature map. For example, in a scenario such as speech recognition or machine recognition, feature maps may be divided into feature maps in three dimensions: a batch (batch) processing dimension B, a channel (channel) dimension C, and a patch (patch) dimension P. The non-adjacent previous network layer is a previous network layer other than the previous network layer adjacent to the optimized attention layer in all the previous network layers of the optimized attention layer. Refer to FIG. 7. For the optimized attention layer in FIG. 7, all the previous network layers are the first layer to the fifth layer, and the fifth layer is an adjacent previous network layer of the optimized attention layer. Therefore, the first layer to the fourth layer in the network are non-adjacent previous network layers of the optimized attention layer. In FIG. 7, the Q module is an optimized query Query feature transformation module, the K module is an optimized key Key feature transformation module, and the V module is an optimized value Value feature transformation module. The Q module, the K module, and the V module in FIG. 7 are respectively the Q module, the K module, and the V module in FIG. 2.

According to the optimization method in this embodiment of this application, optimization processing is performed on the first neural network model to obtain the second neural network model. In the second neural network model, the input of the optimized query Query feature transformation module is obtained based on an output feature of at least one previous network layer of the optimized attention layer; the input of the optimized key Key feature transformation module is obtained based on an output feature of at least one previous network layer of the optimized attention layer; the input of the optimized value Value feature transformation module is obtained based on an output feature of at least one previous network layer of the optimized attention layer; and an input of at least one feature transformation module in the optimized query Query feature transformation module, the optimized key Key feature transformation module, and the optimized value Value feature transformation module is obtained based on an output feature of at least one non-adjacent previous network layer of the optimized attention layer. In this way, the second neural network model obtained through optimization processing is supplemented with inter-layer feature information of a network, thereby enhancing an expression capability of the model, and improving task processing performance of the model.

Particularly, FIG. 7 shows only the optimized query Query feature transformation module, the optimized key Key feature transformation module, and the optimized value Value feature transformation module at the optimized attention layer. The optimized attention layer in FIG. 7 is only a simplified schematic diagram. Actually, in addition to the optimized query Query feature transformation module, the optimized key Key feature transformation module, and the optimized value Value feature transformation module, the optimized attention layer may further include other network layers shown in FIG. 2, such as a matrix multiplication layer, a numerical scaling layer, and a normalization layer. The optimized attention layer may further include a mask layer and the like, depending on different processing tasks of the second neural network model.

In some possible embodiments, an input of a target feature transformation module is the output feature of the at least one previous network layer of the optimized attention layer, and the target feature transformation module is any one of the optimized query Query feature transformation module, the optimized key Key feature transformation module, and the optimized value Value feature transformation module.

Specifically, optionally, the input of the target feature transformation module may be an output feature of a previous network layer of the optimized attention layer. To put it simply, for each target feature transformation module, an output feature of a previous network layer is selected from the previous network layer of the optimized attention layer as an input feature of the target feature transformation module. It is assumed that the previous network layer connected to the optimized query Query feature transformation module is a first previous network layer, the previous network layer connected to the optimized key Key feature transformation module is a second previous network layer, and a previous network layer connected to the optimized value Value feature transformation module is a third previous network layer. The first previous network layer, the second previous network layer, and the third previous network layer may be the same or different, provided that, for a same optimized attention layer, at least one of the first previous network layer, the second previous network layer, and the third previous network layer needs is a non-adjacent previous network layer of the optimized attention layer. FIG. 7 is an example of the optimized attention layer. A previous network layer connected to the optimized query Query feature transformation module is the second previous network layer, a previous network layer connected to the optimized key Key feature transformation module is the fifth previous network layer, and a previous network layer connected to the optimized value Value feature transformation module is the third the previous network layer.

It is assumed that the second neural network model includes a total of L layers (starting from the 0th layer). An output of the optimized attention layer of the ith layer ($1 \leq i \leq L$ - 1) is represented as:

$$y_i = \mathrm{AA_i}\big(Y_{0\sim(i-1)}, Y_{0\sim(i-1)}, Y_{0\sim(i-1)}\big) = \mathrm{Attention_i}(y_a, y_b, y_c)$$

where $0 \leq a, b, c \leq i$ - 1 and $Y_{0\sim(i-1)} = \{y_0, y_1, y_2, \ldots, y_{i-1}\}$. That is, for an optimized attention layer, an output feature of a previous network layer is selected from the output features of all the previous network layers of the optimized attention layer as the input of the optimized query transformation module at the optimized attention layer. The input of the optimized key transformation module and the input of the optimized value transformation module are also determined by using this method.

Optionally, the input of the target feature transformation module may alternatively be output features of at least two previous network layers of the optimized attention layer. To put it simply, for each target feature transformation module, the output features of at least two of the previous network layers of the optimized attention layer are selected as input features of the target feature transformation module. For the optimized query Query feature transformation module, the optimized key Key feature transformation module, and the optimized value Value feature transformation module, the selected previous network layers may be the same or different. Further, in some possible embodiments, at the optimized attention layer of this embodiment, before performing feature transformation, the optimized query Query feature transformation module, the optimized key Key feature transformation module, and the optimized value Value feature transformation module need to perform concatenation (concat) on output features that are of at least two previous network layers and that are input, and then averaging processing needs to be performed.

In some possible embodiments, the first neural network model includes an attention layer that is connected in series and at least two previous network layers that are of the attention layer, and the at least two previous network layers are connected in series. The attention layer is a network layer to which an attention mechanism is applied, and may be the attention layer described in "(7) Attention", or may be a network layer such as a self-attention layer. In this case, the previous network layer is a network layer between the input of the first neural network model and the input of the attention layer. Refer to FIG. 1b. The network structure shown in FIG. 1b is an example of the first neural network model. The attention layer is a self-attention layer, the self-attention layer has five previous network layers connected in series: the first layer to the fifth layer; and the five previous network layers are connected in series to the self-attention layer. Particularly, FIG. 1b shows only the query feature transformation module, the key feature transformation module, and the value feature transformation module at the self-attention layer. The self-attention layer in FIG. 1b is a simplified schematic diagram. In addition to the query feature transformation module, the key feature transformation module, and the value feature transformation module, the self-attention layer may further include other network layers shown in FIG. 2, such as a matrix multiplication layer, a numerical scaling layer, and a normalization layer. The attention layer may further include a mask layer and the like, depending on different processing tasks of the first neural network model.

Further, step 601 specifically includes the following steps.

6011: Determine a search space of the first neural network model, where elements in the search space include previous network layers that can be connected to the first query Query feature transformation module, the first key Key feature transformation module, and the first value Value feature transformation module at the attention layer.

The attention layer includes the first query Query feature transformation module, the first key Key feature transformation module, and the first value Value feature transformation module. The search space includes a previous network layer that can be connected to the first query Query feature transformation module, the first key Key feature transformation module, and the first value Value feature transformation module at each attention layer in the first neural network model. Refer to FIG. 1b, for the self-attention layer in FIG. 1b, previous network layers that may be connected to the query feature transformation module at the self-attention layer are the first previous network layer to the fifth previous network layer, previous network layers that may be connected to the key feature transformation module are the first previous network layer to the fifth previous network layer, and previous network layers that may be connected to the value feature transformation module are the first previous network layer to the fifth previous network layer. Therefore, five previous network layers, namely the first previous network layer to the fifth previous network layer, are used as elements of the search space.

6012: Determine the optimized attention layer according to a search space-based search algorithm, where the search algorithm is used to determine, based on a search condition, a first previous network layer connected to the optimized query Query feature transformation module, a second previous network layer connected to the optimized key Key feature transformation module, and a third previous network layer connected to the optimized value Value feature transformation module; and at least one of the first previous network layer, the second previous network layer, and the third previous network layer is a non-adjacent previous network layer of the optimized attention layer.

Specifically, the search algorithm includes any one of an evolutionary algorithm, a reinforcement learning algorithm, and a network structure search algorithm. A training convergence speed of the evolutionary algorithm is high, which improves a model optimization speed. Certainly, the search algorithm may alternatively be another algorithm, provided that the network structure search function can be implemented. In this embodiment of this application, after the search space corresponding to the first neural network model is determined, the search space-based search algorithm is used to perform search, and the optimized attention layer may be determined. To be specific, the first previous network layer connected to the optimized query Query feature transformation module, the second previous network layer connected to the optimized key Key feature transformation module, and the third previous network layer connected to the optimized value Value feature transformation module at the optimized attention layer are determined, where at least one of the first previous network layer, the second previous network layer, and the third previous network layer is a non-adjacent previous network layer of the optimized attention layer.

The search algorithm can effectively adjust an input connection of an attention layer in the first neural network model, to obtain an optimized attention layer, so that feature information of different layers in the network can be extracted through the optimized attention layer. It can be learned that a connection structure between the optimized attention layer and the previous network layer is different from a connection structure between the attention layer and the previous network layer in the first neural network model, and the optimized attention layer focuses on inter-layer feature fusion. Therefore, the optimized attention layer can enhance an expression capability of the second neural network model, and improve performance of the second neural network model.

It should be specially noted that, through step 6011 and step 6012, a corresponding second neural network model whose input of the target feature transformation module is an output feature of the previous network layer of the optimized attention layer may be obtained.

The following describes in detail an optimization processing process by using an example in which the first neural network model is a transformer network model and the search algorithm is an evolutionary algorithm.

The transformer is a common network structure used on machine translation tasks and includes a large quantity of self-attention operations. The optimization method in this embodiment is used to reselect an input connection manner of all attention operations in a standard transformer network, and search for a better model structure on a machine translation task with reference to an evolutionary algorithm.

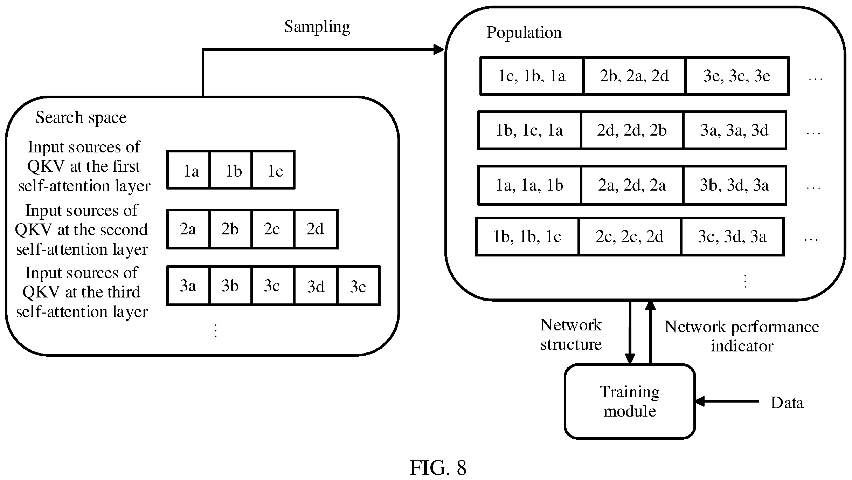

In the optimization method in this embodiment, the network structure search needs to be performed based on an evolutionary algorithm. FIG. 8 shows an example framework of the evolutionary algorithm in this embodiment. The framework of the evolutionary algorithm mainly includes three parts: a search space, a population, and a training module.

A search space includes available options of a structural composition of the first neural network model, which may be manually defined. In this embodiment, the search space is defined as input sources of a query feature transformation module (Q module for short), a key feature transformation module (K module for short), and a value feature transformation module (V module for short) of each self-attention layer in the transformer network. The evolutionary algorithm obtains a network structure by performing random sampling on a network structure search space, and randomly obtains a network structure in each sampling.

A population includes a predefined quantity of samples, and each sample represents a network structure code, which is obtained through sampling from a search space. Operations that may be performed on a population include: sampling and adding the population from the search space, deleting some samples from the population, and selecting a sample from the population for mutation (mutation refers to replacing each code with another option in the search space at a preset probability).

A training module is a task-related module. The training module completes training on a network structure by inputting the network structure and a dataset, evaluates network performance based on the verification dataset, and returns a network performance indicator corresponding to the network.

Refer to FIG. 8. A specific operating procedure of the solution in this embodiment is as follows:

1: Define a search space set L formed by transformer network connection manners, a maximum quantity m of samples in the population, a quantity n of samples included in the subset collected from the population in each iteration, a quantity k of samples with the highest performance in the subset retained in each iteration, and a quantity T of iterations of the evolutionary algorithm. In the search space shown in FIG. 8, optional input sources of a Q module, a K module, and a V module at each self-attention layer are used as elements of the search space. For example, input sources of the QKV at the first self-attention layer are 1a, 1b, and 1c (1a and the like are codes corresponding to a previous network layer of the first self-attention layer), and input sources of the QKV at the second self-attention layer are 2a, 2b, 2c, and 2d (2a and the like are codes corresponding to a previous network layer of the second self-attention layer), and so on.

2: Perform random sampling on the search space L for m times, to form a network structure initial population $L_m = \{l_1, l_2, l_3, \ldots, l_m\}$ including different connection manners. The input sources of the QKV at each self-attention layer are determined in each sampling. That is, each row in FIG. 8 is a sampling process; and the first box in a row corresponds to the input sources of the QKV at the first self-attention layer (for example, in FIG. 8, the first box in the first row of the population is the input sources of QKV at the first layer: 1c, 1b, and 1a), and the second box in the first row corresponds to the input sources of the second self-attention layer, and so on.

3: Randomly collect a subset $L_n$ from the population, where $|L_n| = n$; input each sample in $L_n$ to a training module; and evaluate performance P of each structure in the subset on a translation task, to obtain $P_n = \{p_1, p_2, p_3, ... , p_n\}$.

4: Retain k structures with the highest performance in the subset and eliminate other structures. That is, the $L_k$ = argtopk($P_n$) samples are retained, and the samples corresponding to the eliminated structures are deleted from the population.

5: Perform mutation on the retained k structures $L_k$ to obtain n - k new structures $L_{mutate}$, and update the population to $L'_m = L_m - (L_n - L_k) + L_{mutate}$.

The foregoing steps 3 to 5 are repeatedly iterated, and a structure with optimal performance in the population is selected as a search result after T iterations.

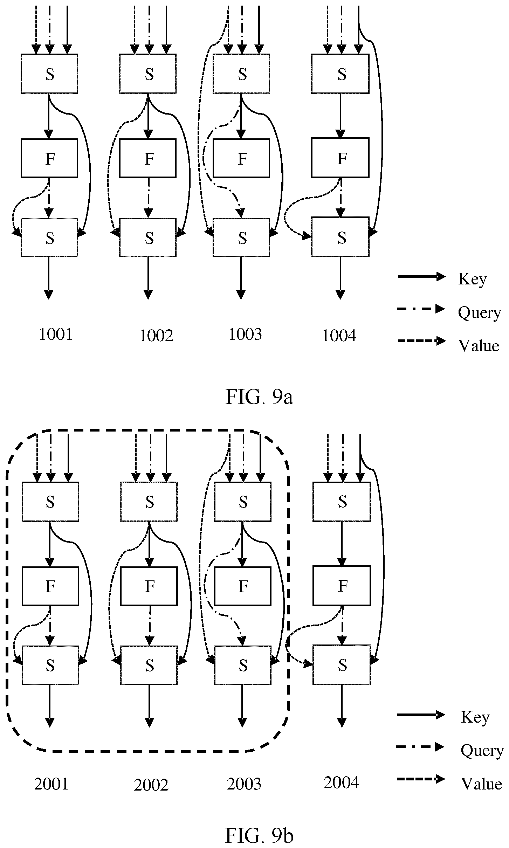

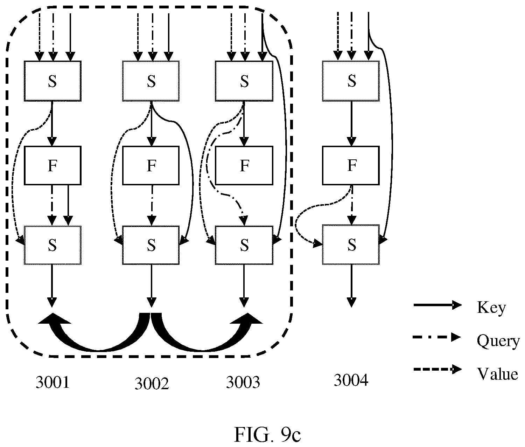

FIG. 9a, FIG. 9b, and FIG. 9c are schematic diagrams of a network structure search process according to an embodiment of this application. For example, a specific search process is as follows:

Refer to FIG. 1b. The search space L is defined as input connection manners of all self-attention operations in a transformer network including two self-attention layers. The maximum quantity of population is m = 4, the quantity of samples included in the subset is n = 3, and the quantity of samples with the highest performance retained for each iteration is k = 1.

S1: Perform m = 4 samplings in the search space L to obtain $L_m = \{l_{1001}, l_{1002}, l_{1003}, l_{1004}\}$.

S2: Randomly sample a subset $L_n = \{l_{2001}, l_{2002}, l_{2003}\}$ whose capacity is n = 3 from the population, and evaluate performance $P_n = \{p_{2001}, p_{2002}, p_{2003}\}$ of three structures in the training module. It is assumed that $p_{2002} > p_{2003} > p_{2001}$. k = 1 structures $l_{2002}$ with the highest performance in the subset are retained, and the samples $l_{2001}$ and $l_{2003}$ are deleted from the population.

S3: Perform mutation on the reserved sample $l_{3002}$ to obtain $L_{mutate} = \{l_{3001}, l_{3003}\}$, and update the population $L'_m$ to $L'_m = \{l_{3001}, l_{3002}, l_{3003}\}$.

The steps S1 to S3 are repeatedly iterated, and a structure with optimal performance in the population is selected as a search result after T iterations.

In conclusion, in the optimization method of the foregoing embodiment, the input connection of the attention operation in the network is encoded, and an evolutionary algorithm is used to search, on a specified task, for an attention structure with better performance.

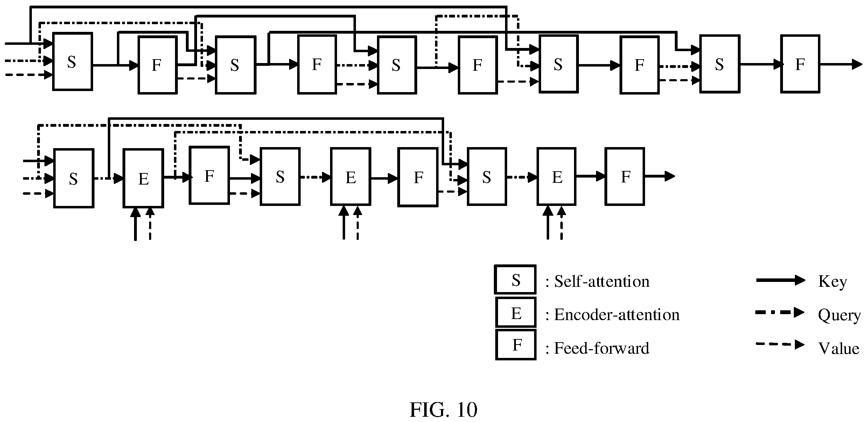

In addition, to describe an optimization effect of the optimization method in this embodiment of this application, a standard transformer network is used as a reference for searching a dataset iwslt14 on a machine translation task, to obtain a new transformer structure (referred to as an aggregate transformer) with an optimized input connection manner. FIG. 10 is a diagram of a structure of an optimized transformer network model according to an embodiment of this application. In the aggregate transformer, the input connection manner of the self-attention layer is greatly different from that of the standard transformer. There are a plurality of key inputs, query inputs, or value inputs that are connected across layers. This is the result of optimizing the input connection manner by using the evolutionary algorithm. As shown in Table 1, the precision of the search result in the dataset iwslt14 (for example, BLEU value, where BLEU is an abbreviation for Bilingual Evaluation Understudy in English and Bilingual Evaluation Understudy in Chinese) is significantly increased when compared with that in the original network, and the precision of the search result in the evolved transformer solution is more significantly increased when compared with that in the conventional technology. A tiny network uses a tiny setting, and a small network uses a small setting.

**Table 1**

| Model | BLEU (tiny network) | BLEU (small network) | Quantity of samples |
|---|---|---|---|
| Transformer | 34.79 | 37.20 | -- |
| Evolved transformer | 34.99 (+0.20) | 37.32 (+0.12) | 2000 |
| Aggregate transformer | 35.30 (+0.51) | 37.60 (+0.40) | 2000 |

In some possible embodiments, the elements in the search space further include at least one of the following: an optional activation function of the first neural network model, an optional normalization operation of the first neural network model, an operation type of an optional feature map of the first neural network model, a quantity of optional parallel branches of the first neural network model, a quantity of modules in an optional search unit, and an optional connection manner between the previous network layers other than the attention layer.

Specifically, the optional activation function includes a Sigmoid function, a Tanh function, a ReLU function, or the like. The optional normalization operation includes layer normalization (layer normalization), batch normalization (batch normalization), instance normalization (instance normalization), switchable normalization (switchable normalization), or the like. The operation type of the feature map is a specific type of a processing operation on the feature map. For example, the processing operation on the feature map is convolution processing. Optional types of a convolutional layer include Conv1*1:2048, Sep Conv 9*1:256 (SeparableConvolutional), and the like. For another example, optional operations on the feature map include a self-attention operation, a gated linear (gated linear) processing operation, and the like. A quantity of optional parallel branches is a quantity of parallel branches allowed by the network during network search. For example, it is assumed that the quantity of parallel branches is 2. In this case, one convolutional layer may be searched and replaced with two parallel convolutional layers during search. A search unit refers to a quantity of modules (which may also be understood as a quantity of network layers) in a unit that is searched and replaced each time during search by using the search algorithm. Specifically, one network layer in the first neural network model may be used as a search unit to perform search and replacement on one network layer, or two network layers in the first neural network model may be used as a search and replacement unit to perform search and replacement on two network layers.

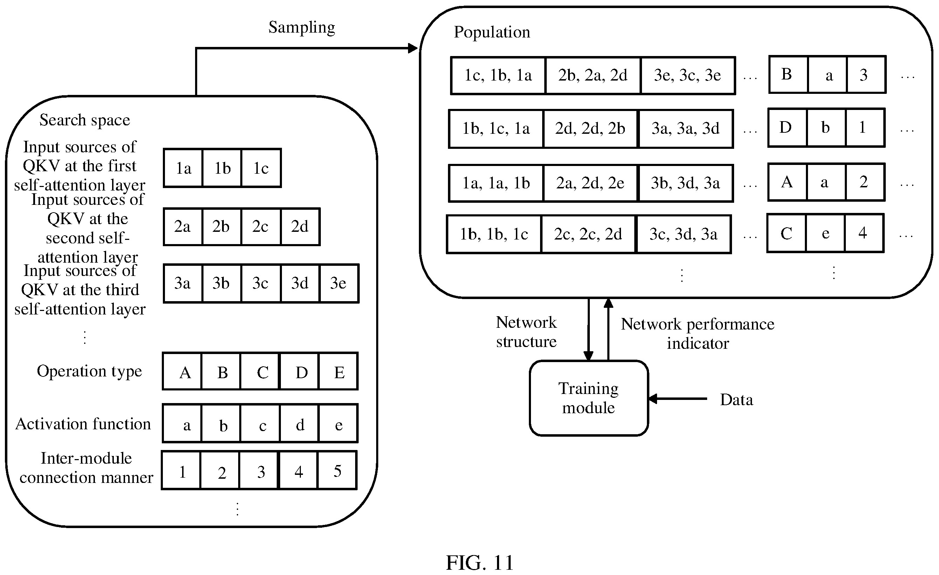

In conclusion, in the search space, in addition to using a possible connection relationship between an attention layer and a previous network layer as an element of the search space, an element of the search space in the conventional technology may be further added to the search space, so that performance of the second neural network model determined through search on a corresponding task can be further improved. An evolutionary algorithm is used as an example. FIG. 11 is a schematic diagram of a framework of another evolutionary algorithm according to an embodiment of this application. In addition to input sources of a Q module, a K module, and a V module at a self-attention layer in a first neural network model, elements in a search space further include an operation type, an activation function, an inter-module (modules other than a module at the self-attention layer in the first neural network model) connection manner, and the like of a feature map. Correspondingly, when the evolutionary algorithm performs network search, a population obtained through sampling is shown in FIG. 11. A processing process of the evolutionary algorithm is similar to the processing process in FIG. 8, and details are not described again.

For example, the first neural network model is a transformer network model. Refer to Table 2. Table 2 compares a model effect before the search space is combined and a model effect after the search is combined. The aggregate transformer is a second neural network model obtained by using a search space that includes only input sources of the Q module, the K module, and the V module at the self-attention layer in the first neural network model. It can be learned that the performance of the detected network on the machine translation task is further improved after search spaces are combined.

**Table 2**

| Model | BLEU (tiny network) | BLEU (small network) |
|---|---|---|
| Transformer | 34.79 | 37.20 |
| Aggregate transformer | 35.30 (+0.51) | 37.60 (+0.40) |
| Combined search space of Aggregate transformer and Evolved transformer | 35.58 (+0.79) | 37.74 (+0.54) |

In some possible embodiments, for the second neural network model whose input of the target feature transformation module is the output features of the at least two previous network layers of the optimized attention layer, similarly, the search space corresponding to the first neural network model may be first determined by using a method similar to step 6011 and step 6012, and then the optimized attention layer is determined according to a search algorithm, that is, at least two previous network layers connected to the optimized query Query feature transformation module, at least two previous network layers connected to the optimized key Key feature transformation module, and at least two previous network layers connected to the optimized value Value feature transformation module at each optimized attention layer are determined. Different from the optimization process corresponding to FIG. 8, in an example in which an input of the target feature transformation module is two output features of the two previous network layers of the optimized attention layer, in this embodiment of this application, each time the search algorithm performs sampling in the search space, for each target feature transformation module, sampling needs to be performed on the two previous network layers connected to the target feature transformation module. Similarly, to further improve performance of the second neural network model, elements in the search space may be extended. For example, an activation function, a normalization operation method, and the like are added to the search space as elements. Refer to the foregoing content. Details are not described again.

In some possible embodiments, an input of a target feature transformation module is an input feature obtained by performing weighted summation on output features of the at least two previous network layers of the optimized attention layer and weights of the previous network layers; and the target feature transformation module is any one of the optimized query Query feature transformation module, the optimized key Key feature transformation module, and the optimized value Value feature transformation module.

Specifically, weighted summation is performed on the output features of the previous network layers, and the weighted summation is used as the input of the target feature transformation module, to implement inter-layer feature fusion, to improve an expression capability of the optimized attention layer, and improve model performance of the second neural network model.

In some possible embodiments, the second neural network model further includes a first fusion module, a second fusion module, and a third fusion module; output ends of all previous network layers of the optimized attention layer are connected to an input end of the first fusion module, and an output end of the first fusion module is connected to an input end of the optimized query Query feature transformation module; and the first fusion module is configured to perform weighted summation processing based on the previous network layer connected to the first fusion module, to obtain a first input feature of the optimized query Query feature transformation module, where a parameter of the first fusion module includes a first weight corresponding to the previous network layer connected to the first fusion module;

the output ends of all the previous network layers of the optimized attention layer are connected to an input end of the second fusion module, an output end of the second fusion module is connected to an input end of the optimized key Key feature transformation module, and the second fusion module is configured to perform weighted summation processing based on the previous network layer connected to the second fusion module to obtain a second input feature input to the optimized key Key feature transformation module, where a parameter of the second fusion module includes a second weight corresponding to the previous network layer connected to the second fusion module; and

the output ends of all the previous network layers of the optimized attention layer are connected to an input end of the third fusion module, an output end of the third fusion module is connected to an input end of the optimized value Value feature transformation module; and the third fusion module is configured to perform weighted summation processing based on the previous network layer connected to the third fusion module to obtain a third input feature input to the optimized value Value feature transformation module, where a parameter of the second fusion module includes a third weight corresponding to the previous network layer connected to the second fusion module.

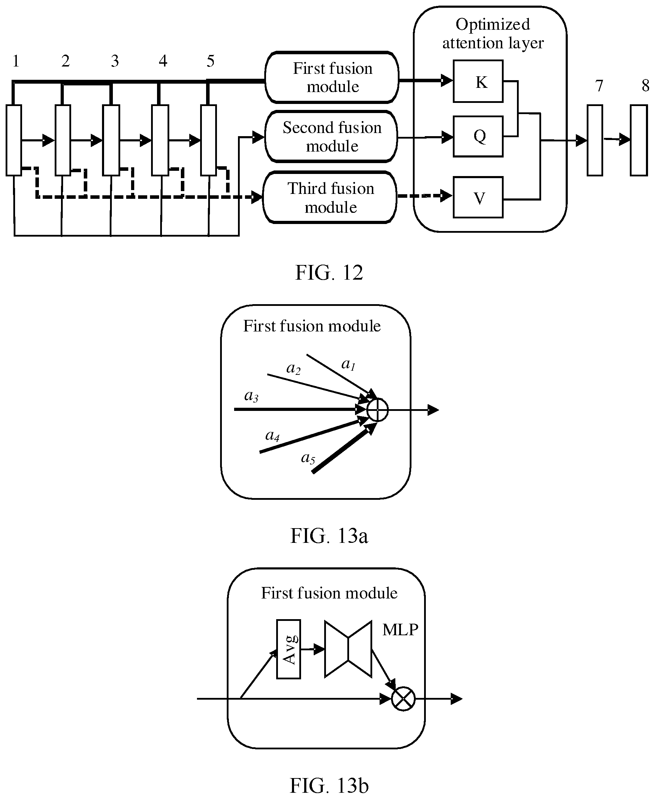

Specifically, for each optimized attention layer, refer to FIG. 12. FIG. 12 is a schematic diagram of a structure of another optimized attention layer according to an embodiment of this application. An optimized query Query feature transformation module (for example, a Q module in FIG. 12) is used as an example. A first fusion module is added before the optimized query Query feature transformation module. The first fusion module is configured to perform weighted summation on all previous network layers of the optimized attention layer to obtain the first input feature of the optimized query Query feature transformation module. A parameter of the first fusion module includes a first weight corresponding to a previous network layer connected to the first fusion module. In this way, the first fusion module may be used to fuse features of the previous network layers of the optimized attention layer, to enhance an expression capability of the optimized attention layer, and improve performance of the second neural network model. Similarly, for the optimized key Key feature transformation module (for example, a K module in FIG. 12), a second fusion module is disposed before the optimized key Key feature transformation module, and a third fusion module is disposed before the optimized value Value feature transformation module (for example, a V module in FIG. 12). It should be specially noted that, compared with an attention layer in the conventional technology, the optimized attention layer in this case has three fusion modules before the optimized attention layer: the first fusion module, the second fusion module, and the third fusion module.

For example, the first neural network model is a standard transformer network. It is assumed that the standard transformer network includes L layers (starting from layer 0), and an output feature of each layer is $Y = \{y_0, y_1, y_2, y_3, ... , y_{L-1}\}$. In this case, an input of the $i^{th}$ optimized attention layer is all output features of all previous network layers of the $i^{th}$ optimized attention layer ($1 \le i \le L - 1$), and is denoted as:

$$Y_{0\sim(i-1)} = \{y_0, y_1, y_2, ..., y_{i-1}\}$$

The output features of all the previous network layers of the optimized attention layer are input to a fusion module. The optimized query Query feature transformation module is used as an example. The output features of all the previous network layers are input to the first fusion module; the first fusion module generates a weight of an output feature of each previous network layer; and a weight matrix of all output features of the previous network layer is denoted as $W_{agg}$. In this case, an output feature of the first fusion module is:

$$\mathrm{Agg}\big(Y_{0 \sim (i-1)}\big) = \mathrm{W}_{\mathrm{agg}} Y_c, \quad \mathrm{W}_{\mathrm{agg}} \in \mathrm{R}^{(i-1) \times (i-1)}$$

$$Y_c = \mathrm{Concat}(Y_{0 \sim (i-1)}) \in \mathrm{R}^{(i-1) \times z}$$

where $Y_c$ is a concatenated feature, and Concat($\cdot$) is a concatenation operation.

Finally, weighted summation is performed on the output features of $i$-1 previous network layer by using the $i$-1$\times i$-1 dimension weight matrix generated by the first fusion module, to obtain an input feature with reference to the output features of all the previous network layers. The input feature is used as an input of the optimized query Query feature transformation module.

Actually, refer to FIG. 12. When the first weight, the second weight, and the third weight are determined, the first neural network model is first optimized to obtain the second neural network model shown in FIG. 12 (FIG. 12 is merely an example), and then the second neural network model is trained by using the training data. Particularly, the optimization method in this embodiment can be used to improve performance of the model in a single training. For example, if the model task of the second neural network model is image classification, a training image with a real label is input to the second neural network model for training. After the second neural network model outputs the prediction label, a first weight, a second weight, and a third weight may be respectively extracted from the first fusion module, the second fusion module, and the third fusion module.

In some possible embodiments, any one of the first fusion module, the second fusion module, and the third fusion module includes any one of the following structures: a static weighting module, a multilayer perceptron module, and an attention module.

In this embodiment of this application, the first fusion module is used as an example. The first fusion module may be implemented by using any one of a static weighting module, a multilayer perceptron module, and an attention module.

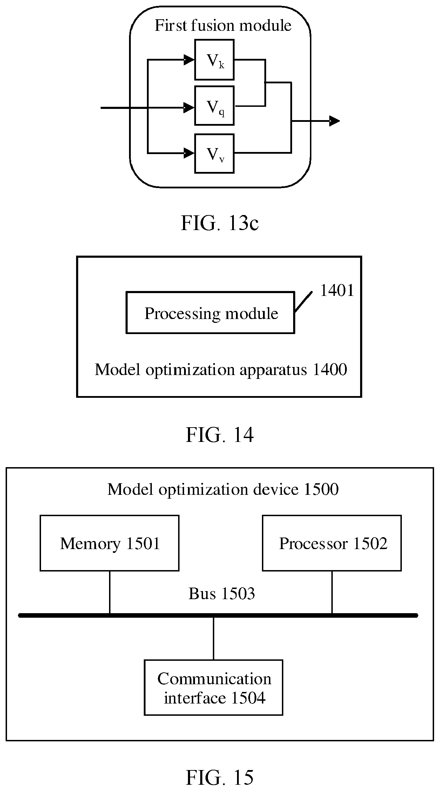

(1) A static weighting module implements weighting by using a static weighted parameter. The first fusion module is used as an example. It is assumed that the first fusion module has $i$-1 previous network layers. The first fusion module includes $i$-1 static parameters, which respectively correspond to the $i$-1 previous network layers, and are denoted as $\mathrm{W}_{\mathrm{agg}} = \mathrm{Diag}(\alpha_1, a_2, \ldots, a_{i-1})$. FIG. 13a, FIG. 13b, and FIG. 13c are diagrams of a structure of a first fusion module according to an embodiment of this application. Refer to FIG. 13a. For example, the first fusion module has five previous network layers, and the first fusion module includes five static weighted parameters: $a_1$, $a_2$, $a_3$, $a_4$, and $a_5$, which respectively correspond to the five previous network layers. After the training of the second neural network model is completed by using the training data, the corresponding static weighted parameters can be obtained from the static weighting module. A plurality of static weighted parameters can be combined to a weight matrix.

(2) A multilayer perceptron module mainly implements weighting by using a multilayer perceptron. The first fusion module is used as an example. For example, the multilayer perceptron is a two-layer perceptron. Refer to FIG. 13b. It is assumed that the first fusion module has $i$-1 previous network layers. It is assumed that a size of the output feature of each previous network layer is (p, c). The multilayer perceptron module first performs concatenation processing on the output features of the $i$-1 previous network layers to obtain a concatenated feature (p, c, $i$-1). Then, the concatenated features are averaged (Avg in FIG. 13b) by using a pooling layer to delete a dimension of p, to obtain (c, $i$-1), and then the averaged features (c, $i$-1) are input to a two-layer perceptron MLP including an activation function. After the training of the second neural network model is completed by using the training data, a corresponding weight matrix $\mathrm{W}_{\mathrm{agg}} = \mathrm{MLP}(\mathrm{AvgPool}(Y_c))$ may be obtained from the multilayer perceptron module.

(3) The attention module mainly implements weighting by dynamically generating an attention operation. Refer to FIG. 13c. The first fusion module is used as an example. It is assumed that the first fusion module has $i$-1 previous network layers, the attention module first performs concatenation processing on the output features of the $i$-1 previous network layers to obtain a concatenated feature $Y_c$, then performs an attention operation on the concatenated feature $Y_c$ (refer to related descriptions in FIG. 2), and then performs averaging to obtain a weight of $i$-1 dimensions, which is denoted as: $\mathrm{W}_{\mathrm{agg}} = \mathrm{AvgPool}(\mathrm{Attention}(Y_c, Y_c, Y_c))$.

In addition, DeiT is a deep learning model used for an image classification task, and a large quantity of self-attention operations are used. For example, the first fusion module, the second fusion module, and the third fusion module are attention modules. The DeiT model is processed by using the optimization method corresponding to FIG. 12 to obtain the second neural network model. An optimized attention layer in the second neural network model is aggregate-attention. Table 3 shows a performance comparison between the DeiT model and the second neural network model. Compared with the DeiT model, the optimized attention layer in the second neural network model significantly improves the performance of the model with a low computation overhead.

**Table 3**

| | Attention layer type | Quantity of network parameters (M) | Network computation workload (B) | Hit rate (%) |
|---|---|---|---|---|
| DeiT model | Self-attention | 5.91 | 1.26 | 74.77 |
| Second neural network model | Agg-attention | 6.26 | 1.33 | 75.23 (+0.46) |

It should be specially noted that, by using the model optimization method in this application, inter-network layer feature information may be supplemented with a small computation overhead, thereby further enhancing an expression capability of the optimized network model. For the optimization method embodiment corresponding to FIG. 7, because no additional convolutional layer is added in this embodiment, no computation overhead of the second neural network model is increased. However, for the optimization method embodiment corresponding to FIG. 12, because in this embodiment, only a weight of each previous network layer needs to be computed, a computation workload required in the computation process is extremely low.

**Embodiment 3**

Based on the neural network model optimization method in Embodiment 2, this application further provides a model optimization apparatus. FIG. 14 is a schematic diagram of a structure of a model optimization apparatus according to an embodiment of this application. The model optimization apparatus 1400 includes:

a processing module 1401, configured to perform optimization processing on a first neural network model to obtain a second neural network model.

The second neural network model includes an optimized attention layer and at least two previous network layers of the optimized attention layer, the at least two previous network layers are connected in series, and the optimized attention layer includes an optimized query Query feature transformation module, an optimized key Key feature transformation module, and an optimized value Value feature transformation module; an input of the optimized query Query feature transformation module is obtained based on an output feature of at least one previous network layer of the optimized attention layer; an input of the optimized key Key feature transformation module is obtained based on an output feature of at least one previous network layer of the optimized attention layer; an input of the optimized value Value feature transformation module is obtained based on an output feature of at least one previous network layer of the optimized attention layer; and an input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

For a detailed execution process of the model optimization apparatus 1400, refer to the description in Embodiment 2. Details are not described again.

In addition, this application further provides a model optimization device. FIG. 15 is a schematic diagram of a structure of a model optimization device according to an embodiment of this application. The model optimization device 1500 (the device 1500 may be specifically a computer device) shown in FIG. 15 includes a memory 1501, a processor 1502, a communication interface 1504, and a bus 1503. Communication connections between the memory 1501, the processor 1502, and the communication interface 1504 are implemented by using the bus 1503.

The memory 1501 may be a read-only memory (Read-Only Memory, ROM), a static storage device, a dynamic storage device, or a random access memory (Random Access Memory, RAM). The memory 1501 may store a program. When the program stored in the memory 1501 is executed by the processor 1502, the processor 1502 and the communication interface 1504 are configured to perform steps of the neural network model optimization method in Embodiment 2 of this application.

The processor 1502 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the model optimization apparatus in the foregoing embodiment, or perform the neural network model optimization method in Embodiment 2.

The processor 1502 may alternatively be an integrated circuit chip and has a signal processing capability. In an implementation process, steps of the neural network model optimization method in Embodiment 2 of this application may be completed by using an integrated logic circuit of hardware in the processor 1502 or instructions in a form of software. The processor 1502 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the neural network model optimization method disclosed with reference to Embodiment 2 of this application may be directly performed by using a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1501. The processor 1502 reads information in the memory 1501, and completes, in combination with hardware of the processor 1502, functions that need to be performed by the units included in the model optimization apparatus in the foregoing embodiments, or performs the neural network model optimization method in the method Embodiment 2 of this application.

The communication interface 1504 uses a transceiver apparatus, for example, but not limited to a transceiver, to implement communication between the model optimization device 1500 and another device or communication network. For example, training data may be obtained through the communication interface 1504.

The bus 1503 may include a path for transmitting information between components (for example, the memory 1501, the processor 1502, and the communication interface 1504) of the model optimization device 1500.

It should be understood that the processing module 1401 in the model optimization apparatus 1400 is equivalent to the processor 1502 in the model optimization device 1500. The model optimization device 1500 shown in FIG. 15 is equivalent to the model optimization device 320 shown in FIG. 3.

It should be noted that although only the memory, the processor, and the communication interface are shown in the model optimization device 1500 shown in FIG. 15, in a specific implementation process, a person skilled in the art should understand that the model optimization device 1500 further includes other components required for implementing normal running. In addition, based on a specific requirement, a person skilled in the art should understand that the model optimization device 1500 may further include hardware components for implementing other additional functions. In addition, a person skilled in the art should understand that the model optimization device 1500 may alternatively include only components that are required for implementing embodiments of this application, but does not necessarily include all the components shown in FIG. 15.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected according to an actual requirement to achieve the objectives of the solutions of the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a computer program product. The computer program product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a chip, where the chip includes a processor and a data interface, and the processor reads, through the data interface, instructions stored in a memory, to perform the neural network model optimization method according to Embodiment 2.

Optionally, in an implementation, the chip may further include a memory, where the memory stores instructions; and the processor is configured to execute the instructions stored in the memory, and when the instructions are executed, the processor is configured to perform the neural network model optimization method according to Embodiment 2.

**Embodiment 4**

Based on the neural network model optimization method in Embodiment 2, this application further provides a neural network model. The neural network model includes an optimized attention layer and at least two previous network layers of the optimized attention layer, and the at least two previous network layers are connected in series; the optimized attention layer includes an optimized query Query feature transformation module, an optimized key Key feature transformation module, and an optimized value Value feature transformation module; an input of the optimized query Query feature transformation module is obtained based on an output feature of at least one previous network layer of the optimized attention layer; an input of the optimized key Key feature transformation module is obtained based on an output feature of at least one previous network layer of the optimized attention layer; an input of the optimized value Value feature transformation module is obtained based on an output feature of at least one previous network layer of the optimized attention layer; and an input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

The neural network model provided in this embodiment of this application is supplemented with inter-layer feature information of a network, thereby enhancing an expression capability of the model, and improving task processing performance of the model.

In some possible embodiments, an input of the target feature transformation module is an output feature of at least one of the optimized attention layer at the previous network layer, and the target feature transformation module is any one of an optimized query Query feature transformation module, an optimized key Key feature transformation module, and an optimized value Value feature transformation module.

In some possible embodiments, an input of a target feature transformation module is an input feature obtained by performing weighted summation on output features of the at least one previous network layer of the optimized attention layer and weights of the previous network layers; and the target feature transformation module is any one of the optimized query Query feature transformation module, the optimized key Key feature transformation module, and the optimized value Value feature transformation module.

In some possible embodiments, the neural network model further includes a first fusion module, a second fusion module, and a third fusion module. Output ends of all previous network layers of the optimized attention layer are connected to an input end of the first fusion module, and an output end of the first fusion module is connected to an input end of the optimized query Query feature transformation module. The first fusion module is configured to perform weighted summation processing based on a previous network layer connected to the first fusion module to obtain a first input feature that is input to the optimized query Query feature transformation module, where a parameter of the first fusion module includes a first weight corresponding to the previous network layer connected to the first fusion module; an output end of all previous network layers of the optimized attention layer is connected to an input end of the second fusion module, and an output end of the second fusion module is connected to an input end of the optimized key Key feature transformation module; the second fusion module is configured to perform weighted summation processing based on a previous network layer connected to the second fusion module to obtain a second input feature that is input to the optimized key Key feature transformation module, where a parameter of the second fusion module includes a second weight corresponding to the previous network layer connected to the second fusion module; an output end of all previous network layers of the optimized attention layer is connected to an input end of the third fusion module, and an output end of the third fusion module is connected to an input end of the optimized value Value feature transformation module; and the third fusion module is configured to perform weighted summation processing based on a previous network layer connected to the third fusion module, to obtain a third input feature input to the optimized value Value feature transformation module, where a parameter of the second fusion module includes a third weight corresponding to the previous network layer connected to the second fusion module.

In some possible embodiments, any one of the first fusion module, the second fusion module, and the third fusion module includes any one of the following structures: a static weighting module, a multilayer perceptron module, and an attention module.

The neural network model in this embodiment of this application is the second neural network model in Embodiment 2. Therefore, for detailed descriptions of the neural network model in this embodiment of this application, refer to the descriptions in Embodiment 2. Details are not described again.

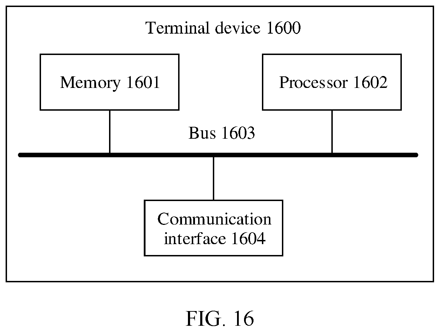

An embodiment of this application further provides a terminal device, where the neural network model according to the embodiments is run on the terminal device. FIG. 16 is a schematic diagram of a structure of the terminal device according to this embodiment of this application. The terminal device 1600 (the terminal device 1600 may be specifically a computer device) shown in FIG. 16 includes a memory 1601, a processor 1602, a communication interface 1604, and a bus 1603. Communication connections between the memory 1601, the processor 1602, and the communication interface 1604 are implemented by using the bus 1603.

The memory 1601 may be a read-only memory (Read-Only Memory, ROM), a static storage device, a dynamic storage device, or a random access memory (Random Access Memory, RAM). The memory 1601 may store a program. When the program stored in the memory 1601 is executed by the processor 1602, the processor 1602 and the communication interface 1604 are configured to run the neural network model in embodiments of this application.

The processor 1602 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function of the neural network model in embodiments of this application.

The processor 1602 may alternatively be an integrated circuit chip and has a signal processing capability. In an implementation process, a function of the neural network model in this embodiment of this application may be completed by using an integrated logic circuit of hardware in the processor 1602 or an instruction in a form of software. The processor 1602 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The general-purpose processor may be a microprocessor, or the processor may be any conventional processor or the like. The software module may be located in a mature storage medium in the art, such as a random access memory, a flash memory, a read-only memory, a programmable read-only memory, an electrically erasable programmable memory, or a register. The storage medium is located in the memory 1601. The processor 1602 reads information in the memory 1601, and completes a function of the neural network model in embodiments of this application in combination with hardware of the processor 1602.

The communication interface 1604 uses a transceiver apparatus, for example, but not limited to, a transceiver, to implement communication between the terminal device 1600 and another device or a communication network. For example, a to-be-processed picture may be obtained through the communication interface 1604.

The bus 1603 may include a path for transmitting information between various components (for example, the memory 1601, the processor 1602, and the communication interface 1604) of the terminal device 1600.

It should be noted that although only the memory, the processor, and the communication interface are shown in the terminal device 1600 shown in FIG. 16, in a specific implementation process, a person skilled in the art should understand that the terminal device 1600 further includes other components required for implementing normal running. In addition, according to a specific requirement, a person skilled in the art should understand that the terminal device 1600 may further include hardware components for implementing other additional functions. In addition, a person skilled in the art should understand that the terminal device 1600 may include only components required for implementing embodiments of this application, but not necessarily include all the components shown in FIG. 16.

It may be understood that the terminal device 1600 shown in FIG. 16 is equivalent to the terminal device 310 in FIG. 3.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network model optimization method, comprising the following step:

    performing optimization processing on a first neural network model to obtain a second neural network model, wherein
    the second neural network model comprises an optimized attention layer and at least two previous network layers of the optimized attention layer, and the at least two previous network layers are connected in series; and the optimized attention layer comprises an optimized query Query feature transformation module, an optimized key Key feature transformation module, and an optimized value Value feature transformation module, wherein

an input of the optimized query Query feature transformation module is obtained based on an output feature of at least one previous network layer of the optimized attention layer;

an input of the optimized key Key feature transformation module is obtained based on an output feature of at least one previous network layer of the optimized attention layer;

an input of the optimized value Value feature transformation module is obtained based on an output feature of at least one previous network layer of the optimized attention layer; and

an input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

2. The method according to claim 1, wherein an input of a target feature transformation module is the output feature of the at least one previous network layer of the optimized attention layer, and the target feature transformation module is any one of the optimized query Query feature transformation module, the optimized key Key feature transformation module, and the optimized value Value feature transformation module.

3. The method according to claim 2, wherein the first neural network model comprises an attention layer and at least two previous network layers of the attention layer that are connected in series, and the at least two previous network layers are connected in series; and the performing optimization processing on a first neural network model to obtain a second neural network model specifically comprises the following steps:

determining a search space of the first neural network model, wherein elements in the search space comprise previous network layers that can be connected to the first query Query feature transformation module, the first key Key feature transformation module, and the first value Value feature transformation module at the attention layer; and

determining the optimized attention layer according to a search space-based search algorithm, wherein the search algorithm is used to determine, based on a search condition, a first previous network layer connected to the optimized query Query feature transformation module, a second previous network layer connected to the optimized key Key feature transformation module, and a third previous network layer connected to the optimized value Value feature transformation module; and at least one of the first previous network layer, the second previous network layer, and the third previous network layer is a non-adjacent previous network layer of the optimized attention layer.

4. The method according to claim 3, wherein the search algorithm comprises any one of an evolutionary algorithm, a reinforcement learning algorithm, and a network structure search algorithm.

5. The method according to claim 3 or 4, wherein the elements in the search space further comprise at least one of the following: an optional activation function of the first neural network model, an optional normalization operation of the first neural network model, an operation type of an optional feature map of the first neural network model, a quantity of optional parallel branches of the first neural network model, a quantity of modules in an optional search unit, and an optional connection manner between previous network layers other than the attention layer.

6. The method according to claim 1, wherein an input of a target feature transformation module is an input feature obtained by performing weighted summation on output features of the at least two previous network layers of the optimized attention layer and weights of the previous network layers; and the target feature transformation module is any one of the optimized query Query feature transformation module, the optimized key Key feature transformation module, and the optimized value Value feature transformation module.

7. The method according to claim 6, wherein the second neural network model further comprises a first fusion module, a second fusion module, and a third fusion module; output ends of all previous network layers of the optimized attention layer are connected to an input end of the first fusion module, and an output end of the first fusion module is connected to an input end of the optimized query Query feature transformation module; and the first fusion module is configured to perform weighted summation processing based on a previous network layer connected to the first fusion module, to obtain a first input feature of the optimized query Query feature transformation module, wherein a parameter of the first fusion module comprises a first weight corresponding to the previous network layer connected to the first fusion module;

the output ends of all the previous network layers of the optimized attention layer are connected to an input end of the second fusion module, and an output end of the second fusion module is connected to an input end of the optimized key Key feature transformation module; and the second fusion module is configured to perform weighted summation processing based on a previous network layer connected to the second fusion module, to obtain a second input feature of the optimized key Key feature transformation module, wherein a parameter of the second fusion module comprises a second weight corresponding to the previous network layer connected to the second fusion module; and

the output ends of all the previous network layers of the optimized attention layer are connected to an input end of the third fusion module, and an output end of the third fusion module is connected to an input end of the optimized value Value feature transformation module; and the third fusion module is configured to perform weighted summation processing based on a previous network layer connected to the third fusion module, to obtain a third input feature of the optimized value Value feature transformation module, wherein a parameter of the second fusion module comprises a third weight corresponding to the previous network layer connected to the second fusion module.

8. The method according to claim 7, wherein any one of the first fusion module, the second fusion module, and the third fusion module comprises any one of the following structures: a static weighting module, a multilayer perceptron module, and an attention module.

9. A neural network model, wherein the neural network model comprises an optimized attention layer and at least two previous network layers of the optimized attention layer, and the at least two previous network layers are connected in series; and the optimized attention layer comprises an optimized query Query feature transformation module, an optimized key Key feature transformation module, and an optimized value Value feature transformation module, wherein

an input of the optimized query Query feature transformation module is obtained based on an output feature of at least one previous network layer of the optimized attention layer;
an input of the optimized key Key feature transformation module is obtained based on an output feature of at least one previous network layer of the optimized attention layer;
an input of the optimized value Value feature transformation module is obtained based on an output feature of at least one previous network layer of the optimized attention layer; and
an input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

10. The model according to claim 9, wherein an input of a target feature transformation module is the output feature of the at least one previous network layer of the optimized attention layer, and the target feature transformation module is any one of the optimized query Query feature transformation module, the optimized key Key feature transformation module, and the optimized value Value feature transformation module.

11. The model according to claim 9, wherein an input of a target feature transformation module is an input feature obtained by performing weighted summation on output features of the at least two previous network layers of the optimized attention layer and weights of the previous network layers; and the target feature transformation module is any one of the optimized query Query feature transformation module, the optimized key Key feature transformation module, and the optimized value Value feature transformation module.

12. The model according to claim 11, wherein the neural network model further comprises a first fusion module, a second fusion module, and a third fusion module, output ends of all previous network layers of the optimized attention layer are connected to an input end of the first fusion module, and an output end of the first fusion module is connected to an input end of the optimized query Query feature transformation module; and the first fusion module is configured to perform weighted summation processing based on a previous network layer connected to the first fusion module, to obtain a first input feature of the optimized query Query feature transformation module, and a parameter of the first fusion module comprises a first weight corresponding to the previous network layer connected to the first fusion module;

the output ends of all the previous network layers of the optimized attention layer are connected to an input end of the second fusion module, and an output end of the second fusion module is connected to an input end of the optimized key Key feature transformation module; and the second fusion module is configured to perform weighted summation processing based on a previous network layer connected to the second fusion module, to obtain a second input feature of the optimized key Key feature transformation module, and a parameter of the second fusion module comprises a second weight corresponding to the previous network layer connected to the second fusion module; and

the output ends of all the previous network layers of the optimized attention layer are connected to an input end of the third fusion module, and an output end of the third fusion module is connected to an input end of the optimized value Value feature transformation module; and the third fusion module is configured to perform weighted summation processing based on a previous network layer connected to the third fusion module, to obtain a third input feature of the optimized value Value feature transformation module, and a parameter of the second fusion module comprises a third weight corresponding to the previous network layer connected to the second fusion module.

13. The model according to claim 12, wherein any one of the first fusion module, the second fusion module, and the third fusion module comprises any one of the following structures: a static weighting module, a multilayer perceptron module, and an attention module.

14. A model optimization apparatus, comprising:

a processing module, configured to perform optimization processing on a first neural network model to obtain a second neural network model, wherein

the second neural network model comprises an optimized attention layer and at least two previous network layers of the optimized attention layer, and the at least two previous network layers are connected in series; and the optimized attention layer comprises an optimized query Query feature transformation module, an optimized key Key feature transformation module, and an optimized value Value feature transformation module, wherein

an input of the optimized query Query feature transformation module is obtained based on an output feature of at least one previous network layer of the optimized attention layer;

an input of the optimized key Key feature transformation module is obtained based on an output feature of at least one previous network layer of the optimized attention layer;

an input of the optimized value Value feature transformation module is obtained based on an output feature of at least one previous network layer of the optimized attention layer; and

an input of at least one feature transformation module in the optimized query Query feature transformation module, the optimized key Key feature transformation module, and the optimized value Value feature transformation module is obtained based on an output feature of at least one non-adjacent previous network layer of the optimized attention layer.

15. A model optimization device, comprising a processor and a memory, wherein the processor is connected to the memory, the memory is configured to store program code, and the processor is configured to invoke the program code, to perform the neural network model optimization method according to any one of claims 1 to 8.

16. A computer-readable storage medium, wherein the computer-readable storage medium stores a computer program, and the computer program is executed by a processor to implement the neural network model optimization method according to any one of claims 1 to 8.

17. A computer program product comprising instructions, wherein when the computer program product runs on a computer, the computer is enabled to perform the neural network model optimization method according to any one of claims 1 to 8.

18. A terminal device, wherein the neural network model according to any one of claims 9 to 13 is run on the terminal device.

FIG. 1a

EP 4 394 656 A1

FIG. 1b

FIG. 2

FIG. 3

Neural network layer 430

| Output layer 440 |
| Hidden layer n (43n) |
| Hidden layer 2 (432) |
| Hidden layer 1 (431) |

Convolutional neural network (CNN) 400

Convolutional layer/Pooling layer 420

| 426 |
| 425 |
| 424 |
| 423 |
| 422 |
| 421 |

Input layer 410

To-be-processed image

FIG. 4

Host CPU

Weight memory 502

Input memory 501

Operation circuit 503

Vector computation unit 507

Accumulator 508

Direct memory access controller 505

Unified memory 506

Controller 504

Instruction fetch buffer 509

External memory

Bus interface unit 510

Neural network processing unit 50

FIG. 5

600

Perform optimization processing on a first neural network model
to obtain a second neural network model

601

FIG. 6

FIG. 7

Sampling

Population

| 1c, 1b, 1a | 2b, 2a, 2d | 3e, 3c, 3e | ... |
|---|---|---|---|
| 1b, 1c, 1a | 2d, 2d, 2b | 3a, 3a, 3d | ... |
| 1a, 1a, 1b | 2a, 2d, 2a | 3b, 3d, 3a | ... |
| 1b, 1b, 1c | 2c, 2c, 2d | 3c, 3d, 3a | ... |

Search space

Input sources of QKV at the first self-attention layer

| 1a | 1b | 1c |
|---|---|---|

Input sources of QKV at the second self-attention layer

| 2a | 2b | 2c | 2d |
|---|---|---|---|

Input sources of QKV at the third self-attention layer

| 3a | 3b | 3c | 3d | 3e |
|---|---|---|---|---|

Network structure

Network performance indicator

Training module

Data

FIG. 8

Key

Query

Value

1001    1002    1003    1004

FIG. 9a

Key

Query

Value

2001    2002    2003    2004

FIG. 9b

FIG. 9c

FIG. 10

FIG. 11

FIG. 12

FIG. 13a

FIG. 13b

FIG. 13c

FIG. 14

FIG. 15

Terminal device 1600

Memory 1601

Processor 1602

Bus 1603

Communication
interface 1604

FIG. 16

## INTERNATIONAL SEARCH REPORT

| International application No. |
| --- |
| **PCT/CN2022/117792** |

### A. CLASSIFICATION OF SUBJECT MATTER

G06N 3/04(2006.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 神经网络, 第一, 第二, 优化, 注意力, 质询, 键, 增强, neural w network, first, second, optimization, attention, query, value, enhance

### C. DOCUMENTS CONSIDERED TO BE RELEVANT

| Category* | Citation of document, with indication, where appropriate, of the relevant passages | Relevant to claim No. |
| --- | --- | --- |
| A | CN 111310684 A (DONGSHENG (SUZHOU) INTELLIGENT TECHNOLOGY CO., LTD.) 19 June 2020 (2020-06-19) description, paragraphs [0005]-[0018] | 1-18 |
| A | CN 111860824 A (ZHONGKE CAMBRICON TECHNOLOGY CO., LTD.) 30 October 2020 (2020-10-30) entire document | 1-18 |
| A | CN 106709565 A (GUANGZHOU SHIYUAN ELECTRONICS CO., LTD.) 24 May 2017 (2017-05-24) entire document | 1-18 |
| A | CN 111368993 A (HUAWEI TECHNOLOGIES CO., LTD.) 03 July 2020 (2020-07-03) entire document | 1-18 |
| A | US 2021279576 A1 (GOOGLE L.L.C.) 09 September 2021 (2021-09-09) entire document | 1-18 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 October 2022** | **01 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| | International application No. |
|---|---|
| | **PCT/CN2022/117792** |

| Patent document cited in search report | Publication date (day/month/year) | Patent family member(s) | Publication date (day/month/year) |
|---|---|---|---|
| CN 111310684 A | 19 June 2020 | None | |
| CN 111860824 A | 30 October 2020 | None | |
| CN 106709565 A | 24 May 2017 | None | |
| CN 111368993 A | 03 July 2020 | WO 2021159714 A1 | 19 August 2021 |
| US 2021279576 A1 | 09 September 2021 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111100770X